# EUROPÄISCHE PATENTSCHRIFT

(11) **EP 2 841 800 B1**
(45) Veröffentlichungstag und Bekanntmachung des Hinweises auf die Patenterteilung: **03.10.2018**
(21) Anmeldenummer: 13709192.2
(22) Anmeldetag: 13.03.2013
(51) Int. Cl.: F16H 3/66, F16H 37/04

(54) **LASTSCHALTBARES MEHRSTUFENGETRIEBE**
MULTI-STAGE POWER-SHIFT TRANSMISSION
BOÎTE DE VITESSES À RAPPORTS MULTIPLES COUPLABLE SOUS CHARGE

(30) Priorität: 27.04.2012 DE 102012207099
(43) Veröffentlichungstag der Anmeldung: 04.03.2015
(73) Patentinhaber: ZF Friedrichshafen AG, 88046 Friedrichshafen (DE)
(72) Erfinder: BECK, Stefan, 88097 Eriskirch (DE)
(86) Internationale Anmeldenummer: PCT/EP2013/055063
(87) Internationale Veröffentlichungsnummer: WO 2013/159994

(56) Entgegenhaltungen:
- DE-A1-102005 018 804
- DE-A1-102009 018 958
- US-A1- 2009 036 252
- US-A1- 2010 035 718
- US-A1- 2012 053 003
- US-A1- 2012 088 627

## Beschreibung

Die vorliegende Erfindung bezieht sich auf ein lastschaltbares Mehrstufengetriebe in Planetenbauweise für ein Fahrzeug, das beispielsweise als ein Automatgetriebe verwendet werden kann.

Lastschaltbare Mehrstufengetriebe finden eine Anwendung als Fahrgetriebe in Antriebssträngen von Fahrzeugen. Solche Mehrstufengetriebe weisen mehrere Getriebestufen und mehrere Schaltelemente auf. So finden sich in Ausführungen für Personenkraftwagen mit bis zu acht Vorwärtsgängen für Frontquereinbau oder für Längseinbau. Zur Erzeugung der Getriebeübersetzungen gibt es lastschaltbare Mehrstufengetriebe mit Stirnradstufen und mit Planetenradstufen. Bei Mehrstufengetrieben mit Planetenradstufen handelt es sich meist um Automatgetriebe, welche mittels Reibungselementen beziehungsweise Schaltelementen, wie etwa Kupplungen und Bremsen, geschaltet werden. Üblicherweise sind derartige Mehrstufengetriebe mit einem Anfahrelement, wie etwa einem hydrodynamischen Drehmomentwandler oder einer Strömungskupplung, verbunden. Ein solches Anfahrelement unterliegt einer Schlupfwirkung und ist wahlweise mit einer Überbrückungskupplung versehen. Die bekannten Getriebekonzepte weisen spezifische Vorteile und spezifische Nachteile auf, sodass diese nur für bestimmte Anwendungsfälle interessant sind.

Die Patentschrift US 7,819,772 B2 offenbart ein lastschaltbares Mehrstufengetriebe zwischen einer Antriebswelle und einer Abtriebswelle. Das Mehrstufengetriebe weist mehrere Getriebestufen und mehrere Schaltelemente auf.

Aus der US 2010/0035718 A1 ist ein lastschaltbares Mehrstufengetriebe nach dem Oberbegriff des Patentanspruchs 1 bekannt.

Aus der der US 2012/088627 A1 ist ein lastschaltbares Mehrstufengetriebe mit zehn Vorwärtsgängen bekannt.

Vor diesem Hintergrund schafft die vorliegende Erfindung ein verbessertes lastschaltbares Mehrstufengetriebe in Planetenbauweise für ein Fahrzeug gemäß dem Hauptanspruch. Vorteilhafte Ausgestaltungen ergeben sich aus den Unteransprüchen und der nachfolgenden Beschreibung.

Ein lastschaltbares Mehrstufengetriebe in Planetenbauweise zwischen einer Antriebswelle und einer Abtriebswelle, insbesondere Automatgetriebe für ein Fahrzeug, weist zwei parallele Wellenstränge, sechs Schaltelemente, zumindest zwei Stirnradstufen und drei Planetenradsätze mit jeweils einem Sonnenrad, einem Hohlrad und einem Planetenträger mit mehreren Planetenrädern auf, wobei der Planetenträger in einem Steg zusammengeführt ist. Die beiden Wellenstränge sind über die zumindest zwei Stirnradstufen miteinander verbindbar. Durch ein selektives Eingreifen der sechs Schaltelemente sind verschiedene Übersetzungsverhältnisse zwischen der Antriebswelle und der Abtriebswelle bewirkbar. Dadurch sind eine Mehrzahl an Vorwärtsgängen, insbesondere zumindest neun Vorwärtsgänge, und zumindest ein Rückwärtsgang realisierbar.

Bei dem Fahrzeug kann es sich um ein Kraftfahrzeug, beispielsweise einen Personenkraftwagen, einen Lastkraftwagen oder ein sonstiges Nutzfahrzeug handeln. Das Fahrzeug kann mit einem Verbrennungsmotor und gleichzeitig oder alternativ mit einem Elektro-Antrieb ausgestattet sein, also auch als ein HybridFahrzeug ausgeführt sein. Die Aufteilung der gekoppelten Planetenradstufen auf nur zwei Wellenstränge führt zu einer kurzen Baulänge, aber auch zu einer kompakten Gesamtanordnung.

Unter einem Schaltelement kann je nach Ausführungsform eine Kupplung oder eine Bremse verstanden werden. Ein Schaltelement kann sowohl als ein reibschlüssiges als auch als ein formschlüssiges Schaltelement ausgeführt sein. Ein eingesetztes Schaltelement kann als eine lastschaltende Kupplung oder eine lastschaltende Bremse ausgebildet sein. Insbesondere kann ein Schaltelement als eine kraftschlüssige Kupplung oder als eine kraftschlüssige Bremse, wie z.B. eine Lamellenkupplung, eine Bandbremse oder eine Konuskupplung, ausgeführt sein. Des weiteren kann ein Schaltelement als eine formschlüssige Bremse oder eine formschlüssige Kupplung, wie z.B. eine Synchronisierung oder eine Klauenkupplung, ausgeführt sein. Für die sechs Schaltelemente des Mehrstufengetriebes können Schaltelemente unterschiedlicher Art eingesetzt werden.

Für die Stirnradstufen und für die Planetenradsätze kann auf bekannte Anordnungen zurückgegriffen werden. Beispielsweise kann das Mehrstufengetriebe genau zwei Stirnradstufen, also nicht mehr als zwei Stirnradstufen oder genau drei Stirnradstufen, also nicht mehr als drei Stirnradstufen aufweisen. Bezüglich der Planetenradsätze kann das Mehrstufengetriebe beispielsweise genau drei Planetenradsätze, also nicht mehr als drei Planetenradsätze aufweisen.

Für frontquer-getriebene Fahrzeuge ist insbesondere eine parallele Anordnung der beiden Wellenstränge von Vorteil. Somit können die Antriebswelle und die Abtriebswelle parallel zueinander angeordnet sein. Das Mehrstufengetriebe weist vorteilhaft eine kurze axiale Bauweise auf, die ideal für die Frontquer-Bauweise ist. Ferner zeichnet sich das Mehrstufengetriebe durch einen geringen Bauaufwand, niedrige Kosten und niedriges Gewicht sowie eine gute Übersetzungsreihe, niedrige Absolutdrehzahlen, niedrige Relativdrehzahlen, niedrige Planetensatzmomente und niedrige Schaltelementmomente,gute Verzahnungswirkungsgrade und eine kompakte Bauweise aus.

Gemäß einer Ausführungsform handelt es sich bei dem Mehrstufengetriebe um ein 9-Gang-Planetenlastschaltgetriebe. Durch eine entsprechende Anordnung der Radsätze und der Schaltelemente kann das Mehrstufengetriebe auch als Frontquer-System nutzbar sein. Das Mehrstufengetriebe kann zumindest neun Vorwärtsgänge umfassen. Dabei kann das Mehrstufengetriebe mit drei Planetenradsätzen realisiert werden.

Somit kann das lastschaltbare Mehrstufengetriebe in Planetenbauweise über zumindest neun Vorwärtsgänge sowie einen Rückwärtsgang verfügen und eine für Kraftfahrzeuge sehr gut geeignete Übersetzung mit einer hohen Gesamtspreizung sowie günstigen Stufensprüngen aufweisen. Das Getriebe kann eine hohe Anfahrübersetzung in Vorwärtsrichtung ermöglichen und einen direkten Gang enthalten. Dabei erfordert das Mehrstufengetriebe nur einen geringen Bauaufwand und zeichnet sich insbesondere durch eine geringe Anzahl an Schaltelementen aus und vermeidet bei sequenzieller Schaltweise Doppelschaltungen. Dadurch kann bei Schaltungen in definierten Ganggruppen jeweils nur ein zuvor geschlossenes Schaltelement geöffnet und ein zuvor geöffnetes Schaltelement geschlossen werden.

Bezüglich des Mehrstufengetriebes lassen sich zwei grundsätzliche Anordnungen realisieren, die im Folgenden als erfindungsgemäßes erstes und nicht erfindungsgemäßes zweites Hauptsystem bezeichnet werden. Im ersten Hauptsystem sind die drei Planetenradsätze auf dem ersten Wellenstrang angeordnet. Im zweiten Hauptsystem sind zwei der drei Planetenradsätze auf dem ersten Wellenstrang und einer der drei Planetenradsätze auf dem zweiten Wellenstrang angeordnet, wobei im Vergleich zum ersten Hauptsystem eine zusätzliche Stirnradstufe benötigt wird.

Für die beiden Hauptsysteme können zusätzlich noch verschiedene Anordnungsvarianten umgesetzt werden. Dazu können Schaltelemente in einem Leistungspfad des Getriebes gleich wirkend an unterschiedlichen Stellen des Leistungspfades angeordnet werden. Insbesondere ergeben sich für die nachfolgend als erstes und viertes Schaltelement bezeichneten Schaltelemente verschiedenen Kopplungsmöglichkeiten an die verschiedenen Wellen des Mehrstufengetriebes. Somit lässt sich eine ganze Getriebefamilie realisieren.

Die Merkmale des ersten Hauptsystems sind in Anspruch 1 definiert.

Im Kraftfluss kann so verstanden werden, dass über das jeweilige Schaltelement eine Kraft übertragen werden kann, wenn das jeweilige Schaltelement geschlossen ist. Ist das Schaltelement dagegen geöffnet, so kann über das jeweilige Schaltelement keine Kraft übertragen werden, der Kraftfluss kann also unterbrochen sein.

Unter einem Verbindungselement kann eine Welle verstanden werden. Je nach Ausführungsform kann unter einem Verbindungselement entweder ein starres Element verstanden werden oder aber ein aus mindestens zwei über eine Kupplung gekoppelten Teilelementen zusammengesetztes Element verstanden werden. Somit können zwei mittels eines Verbindungselements verbundene Elemente verdrehfest miteinander verbunden sein und beispielsweise eine starre Welle bilden. Alternativ kann ein Verbindungselement eine Kupplung aufweisen. Auf jeder Welle des Mehrstufengetriebes kann prinzipiell ein Freilauf zum Gehäuse oder zu einer anderen Welle angeordnet werden.

Für das dargestellte erste Hauptsystem können einzelne der Schaltelemente an unterschiedlichen Stellen der Leistungspfade angeordnet werden ohne eine Veränderung in den Getriebeübersetzungen oder einer Schaltmatrix zu bewirken. So können in unterschiedlichen Anordnungsvarianten an unterschiedlichen Stellen Leistungspfade im Getriebe über Kupplungen, hier das erste und das vierte Schaltelement, verbunden oder getrennt werden, wobei dies gleich wirkend an verschiedenen Stellen eines Leistungspfades geschehen kann. So ergeben sich die folgend beschriebenen Alternativen Ausführungsformen für das erste Hauptsystem.

In einer Ausführungsform des ersten Hauptsystems kann das siebte Verbindungselement ein erstes Schaltelement der sechs Schaltelemente aufweisen. Dabei kann das erste Schaltelement im Kraftfluss zwischen der Antriebswelle und dem Steg des ersten Planetenradsatzes angeordnet sein.

In einer weiteren Ausführungsform des ersten Hauptsystems kann das zweite Verbindungselement das erste Schaltelement aufweisen. Dabei kann das erste Schaltelement im Kraftfluss zwischen dem gemeinsamen Verbindungspunkt des zweiten, des vierten und des vierzehnten Verbindungselements und dem Sonnenrad des ersten Planetenradsatzes angeordnet sein.

In einer weiteren Ausführungsform des ersten Hauptsystems kann das fünfte Verbindungselement das erste Schaltelement aufweisen. Dabei kann das erste Schaltelement im Kraftfluss zwischen einem Hohlrad des ersten Planetenradsatzes und einem ersten Stirnrad der ersten Stirnradstufe angeordnet sein.

In einer weiteren Ausführungsform des ersten Hauptsystems kann das sechste Verbindungselement das erste Schaltelement aufweisen. Dabei kann das erste Schaltelement im Kraftfluss zwischen einem zweiten Stirnrad der ersten Stirnradstufe und der Abtriebswelle angeordnet sein.

Im Folgenden werden Ausführungsformen des nicht von der Erfindung umfassten zweiten Hauptsystems beschrieben.

Im Unterschied zum dargestellten ersten Hauptsystem kann bei dem zweiten Hauptsystem einer der Planetenradsätze auf dem zweiten Wellenstrang angeordnet werden. Dabei kann der auf dem zweiten Wellenstrang angeordnete Planetenradsatz auf zumindest zwei Arten mit den Stirnradstufen bei gleichbleibender Höhe der Standübersetzungen und Höhe der Getriebeübersetzungen des Hauptsystems gekoppelt werden.

Gemäß dem zweiten Hauptsystem können zwei Planetenradsätze und die Antriebswelle auf einem ersten Wellenstrang der zwei parallelen Wellenstränge angeordnet sein. Ein erster Planetenradsatz der drei Planetenradsätze und die Abtriebswelle können auf einem zweiten Wellenstrang der zwei parallelen Wellenstränge angeordnet sein. Die zwei parallelen Wellenstränge können über drei Stirnradstufen miteinander verbindbar sein. Ein Sonnenrad eines zweiten Planetenradsatzes der drei Planetenradsätze und die Antriebswelle können verdrehfest miteinander verbunden sein und ein erstes Verbindungselement bilden. Ein Hohlrad eines dritten Planetenradsatzes der drei Planetenradsätze und der Steg des zweiten Planetenradsatzes können verdrehfest miteinander verbunden sein und ein drittes Verbindungselement bilden. Ein Hohlrad des zweiten Planetenradsatzes und ein erstes Stirnrad einer zweiten Stirnradstufe der zumindest zwei Stirnradstufen verbunden können verbunden sein und ein viertes Verbindungselement bilden. Ein zweites Stirnrad der zweiten Stirnradstufe und die Abtriebswelle können verbunden sein und ein achtes Verbindungselement bilden. Das erste Stirnrad der zweiten Stirnradstufe, ein erstes Stirnrad einer vierten Stirnradstufe der zumindest zwei Stirnradstufen und das vierte Verbindungselement können miteinander verbunden sein, wobei die Verbindung zwischen dem ersten Stirnrad der vierten Stirnradstufe der zumindest zwei Stirnradstufen und dem vierten Verbindungselement ein neuntes Verbindungselement bildet und die Verbindung zwischen dem ersten Stirnrad der zweiten Stirnradstufe und dem vierten sowie neunten Verbindungselement ein vierzehntes Verbindungselement bildet. Die Abtriebswelle und das Hohlrad des ersten Planetenradsatzes können verbunden sein und ein zehntes Verbindungselement bilden. Ein erstes Stirnrad einer dritten Stirnradstufe der zumindest zwei Stirnradstufen und die Antriebswelle können miteinander verbunden sein und ein dreizehntes Verbindungselement bilden. Mittels eines zweiten Schaltelements der sechs Schaltelemente kann die Antriebswelle mit dem Steg des dritten Planetenradsatzes verbindbar sein. Mittels eines dritten Schaltelements der sechs Schaltelemente kann der Steg des dritten Planetenradsatzes mit der Verbindung des ersten Stirnrads der zweiten Stirnradstufe mit dem Hohlrad des zweiten Planetenradsatzes verbindbar sein. Ein fünftes Schaltelement der sechs Schaltelemente kann im Kraftfluss zwischen dem Steg des dritten Planetenradsatzes und dem Getriebegehäuse angeordnet sein. Ein sechstes Schaltelement der sechs Schaltelemente kann im Kraftfluss zwischen dem Sonnenrad des dritten Planetenradsatzes und dem Getriebegehäuse angeordnet sein. Ein zweites Stirnrad der vierten Stirnradstufe und der Steg des ersten Planetenradsatzes können verbunden sein und ein elftes Verbindungselement bilden. Ein zweites Stirnrad der dritten Stirnradstufe und das Sonnenrad des ersten Planetenradsatzes können verbunden sein und ein zwölftes Verbindungselement bilden.

Alternativ dazu können gemäß dem zweiten Hauptsystem zwei Planetenradsätze und die Antriebswelle auf einem ersten Wellenstrang der zwei parallelen Wellenstränge angeordnet sein. Ein erster Planetenradsatz der drei Planetenradsätze und die Abtriebswelle können auf einem zweiten Wellenstrang der zwei parallelen Wellenstränge angeordnet sein. Die zwei parallelen Wellenstränge können über drei Stirnradstufen miteinander verbindbar sein. Ein Sonnenrad eines zweiten Planetenradsatzes der drei Planetenradsätze und die Antriebswelle können verdrehfest miteinander verbunden sein und ein erstes Verbindungselement bilden. Ein Hohlrad eines dritten Planetenradsatzes der drei Planetenradsätze und der Steg des zweiten Planetenradsatzes können verdrehfest miteinander verbunden sein und ein drittes Verbindungselement bilden. Ein Hohlrad des zweiten Planetenradsatzes und ein Stirnrad einer zweiten Stirnradstufe der zumindest zwei Stirnradstufen können miteinander verbunden sein und ein viertes Verbindungselement bilden. Ein zweites Stirnrad der zweiten Stirnradstufe und die Abtriebswelle können verbunden sein und ein achtes Verbindungselement bilden. Der Steg des zweiten Planetenradsatzes und ein erstes Stirnrad einer vierten Stirnradstufe der zumindest zwei Stirnradstufen können verdrehfest verbunden sein und ein neuntes Verbindungselement bilden. Die Abtriebswelle und das Hohlrad des ersten Planetenradsatzes können verdrehfest verbunden sein und ein zehntes Verbindungselement bilden. Ein erstes Stirnrad einer dritten Stirnradstufe der zumindest zwei Stirnradstufen und die Antriebswelle können verbunden sein und ein dreizehntes Verbindungselement bilden. Mittels eines zweiten Schaltelements der sechs Schaltelemente kann die Antriebswelle mit dem Steg des dritten Planetenradsatzes verbindbar sein. Mittels eines dritten Schaltelements der sechs Schaltelemente kann der Steg des dritten Planetenradsatzes mit der Verbindung des ersten Stirnrads der zweiten Stirnradstufe mit dem Hohlrad des zweiten Planetenradsatzes verbindbar sein. Ein fünftes Schaltelement der sechs Schaltelemente kann im Kraftfluss zwischen dem Steg des dritten Planetenradsatzes und dem Getriebegehäuse angeordnet sein. Ein sechstes Schaltelement der sechs Schaltelemente kann im Kraftfluss zwischen dem Sonnenrad des dritten Planetenradsatzes und dem Getriebegehäuse angeordnet sein. Ein zweites Stirnrad der vierten Stirnradstufe und das Sonnenrad des ersten Planetenradsatzes können verbunden sein und ein elftes Verbindungselement bilden. Ein zweites Stirnrad der dritten Stirnradstufe und der Steg des ersten Planetenradsatzes können verbunden sein und ein zwölftes Verbindungselement bilden.

Entsprechend der Darstellung für das erste Hauptsystem ergeben sich auch für das nicht von der Erfindung umfasste zweite Hauptsystem gleich wirkende, alternative Ausführungsvarianten durch Verschiebung von Schaltelementen auf einem Leistungspfad. So kann das erste Schaltelement gleich wirkend an zumindest fünf Stellen und das vierte Schaltelement gleich wirkend an zumindest zwei Stellen positioniert werden.

Somit kann gemäß einer Ausführungsform des zweiten Hauptsystems das dreizehnte Verbindungselement ein erstes Schaltelement der sechs Schaltelemente aufweisen. Dabei kann das erste Schaltelement im Kraftfluss zwischen der Antriebswelle und dem ersten Stirnrad der dritten Stirnradstufe angeordnet sein.

Ferner kann gemäß einer weiteren Ausführungsform des zweiten Hauptsystems das zwölfte Verbindungselement ein erstes Schaltelement der sechs Schaltelemente aufweisen.

Ferner kann gemäß einer weiteren Ausführungsform des zweiten Hauptsystems das elfte Verbindungselement ein erstes Schaltelement der sechs Schaltelemente aufweisen.

Ferner kann gemäß einer weiteren Ausführungsform des zweiten Hauptsystems das zehnte Verbindungselement ein erstes Schaltelement der sechs Schaltelemente aufweisen.

Ferner kann gemäß einer weiteren Ausführungsform des zweiten Hauptsystems das neunte Verbindungselement ein erstes Schaltelement aufweisen.

Ferner kann gemäß weiterer Ausführungsformen der beiden Hauptsysteme das achte Verbindungselement ein viertes Schaltelement der sechs Schaltelemente aufweisen. Dabei kann das vierte Schaltelement im Kraftfluss zwischen dem zweiten Stirnrad der zweiten Stirnradstufe und der Abtriebswelle angeordnet sein.

Ferner kann gemäß weiterer Ausführungsformen der beiden Hauptsysteme das vierzehnte Verbindungselement ein viertes Schaltelement der sechs Schaltelemente aufweisen. Dabei kann das vierzehnte Schaltelement im Kraftfluss zwischen dem vierten Verbindungselement beziehungsweise neunten Verbindungselement und dem ersten Stirnrad der zweiten Stirnradstufe angeordnet sein.

Die Hybridisierung von Fahrzeugen gewinnt immer mehr an Bedeutung.

Gemäß einer Ausführungsform kann auf der Antriebswelle eine Leistungsquelle angeordnet sein. Bei der Leistungsquelle kann es sich um einen Motor, beispielsweise um einen Elektromotor handeln. Die Leistungsquelle kann achsparallel zur Antriebswelle angeordnet werden. In einem weiteren Ausführungsbeispiel kann die Leistungsquelle direkt auf der Antriebswelle angeordnet werden.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist. Wie bereits beschrieben, kann prinzipiell auf jeder Welle, hier auch als Verbindungselement bezeichnet, eine elektrische Maschine oder sonstige Kraft-/Leistungsquelle angeordnet werden. Allerdings erscheint insbesondere für die elektrische Maschine eine Verknüpfung mit der Antriebswelle sinnvoll. Sie kann entweder direkt auf oder achsparallel über ein Radpaar mit der Antriebswelle verbunden sein. Diese Varianten sind für alle dargestellten Konzepte möglich.

Gemäß den Ausführungsformen sind alle drei Planetenradsätze beispielhaft als sogenannte Minus-Planetenradsätze ausgeführt, deren jeweiliges Hohlrad bei festgehaltenem Steg in zum Sonnenrad entgegengesetzter Richtung rotiert.

In einer Ausführungsform der vorliegenden Erfindung kann zumindest ein Planetenradsatz als sogenannter Plus-Planetenradsatz ausgeführt werden, wenn die beschriebene Steg- und Hohlradanbindung des betreffenden Planetenradsatzes getauscht wird und die Standübersetzung angepasst wird. Ein Plus-Planetenradsatz bezeichnet ein Planetengetriebe, dessen Hohlrad mit gleicher Drehrichtung rotiert wie das Sonnenrad, wenn der Steg festgehalten wird. Ein Minus-Planetenradsatz weist an einem Planetenträger verdrehbar gelagerte Planetenräder auf, die mit Sonnenrad und Hohlrad dieses Planetenradsatzes kämmen, sodass sich das Hohlrad bei festgehaltenem Planetenträger und drehendem Sonnenrad in zur Sonnenraddrehrichtung entgegengesetzter Richtung dreht. Ein Plus-Planetenradsatz weist an einem Planetenträger verdrehbar gelagerte und miteinander in Zahneingriff stehende innere und äußere Planetenräder auf, wobei das Sonnenrad dieses Planetenradsatzes mit den genannten inneren Planetenrädern und das Hohlrad dieses Planetenradsatzes mit den genannten äußeren Planetenrädern kämmen, sodass sich das Hohlrad bei festgehaltenem Planetenträger und drehendem Sonnenrad in zur Sonnenraddrehrichtung gleicher Richtung dreht.

Generell gilt für die unterschiedlichen Ausführungsformen, dass überall dort, wo es die Bindbarkeit zulässt, einzelne oder mehrere Minus-Planetenradsätze in Plus-Planetenradsätze umgewandelt werden können, wenn gleichzeitig die Steg- und Hohlradanbindung getauscht, und der Betrag der Standübersetzung um eins erhöht wird.

Gemäß einer Ausführungsform kann sich der erste Vorwärtsgang des Mehrstufengetriebes durch Schließen des dritten, vierten und sechsten Schaltelements ergeben. Der zweite Vorwärtsgang kann sich durch Schließen des zweiten, dritten und vierten Schaltelements ergeben. Der dritte Vorwärtsgang kann sich durch Schließen des zweiten, vierten und sechsten Schaltelements ergeben. Der vierte Vorwärtsgang kann sich durch Schließen des ersten, zweiten und vierten Schaltelements ergeben. Der fünfte Vorwärtsgang kann sich durch Schließen des ersten, zweiten und sechsten Schaltelements ergeben. Der sechste Vorwärtsgang kann sich durch Schließen des ersten, zweiten und dritten Schaltelements ergeben. Der siebte Vorwärtsgang kann sich durch Schließen des ersten, dritten und sechsten Schaltelements ergeben. Der achte Vorwärtsgang kann sich durch Schließen des ersten, dritten und fünften Schaltelements ergeben. Der neunte Vorwärtsgang kann sich durch Schließen des ersten, fünften und sechsten Schaltelements ergeben. Der Rückwärtsgang kann sich durch Schließen des vierten, fünften und sechsten Schaltelements ergeben.

Das beschriebene Getriebe kann aus dem antriebsseitigen ersten Wellenstrang und dem abtriebsseitigen zweiten Wellenstrang bestehen. Diese beiden Wellenstränge können durch zumindest zwei Leistungspfade verbunden sein, zu denen die zumindest zwei Stirnradstufen gehören können. Wenn Leistungspfade durch Kupplungen getrennt werden, so kann das gleichwertig an einer beliebigen Stelle innerhalb des Leistungspfades geschehen. Wenn solche Leistungspfade durch Bremsen mit dem Getriebegehäuse verbindbar sind, so kann diese Bremse gleichwertig auch an anderen Stellen des Leistungspfades angreifen. Identische Standübersetzungen können durch unterschiedliche Planetengetriebestrukturen erzeugt werden, die dann im Sinne dieser Erfindung als gleichwertig gelten sollen.

Die Erfindung wird anhand der beigefügten Zeichnungen beispielhaft näher erläutert. Es zeigen:
Fig. 1 eine schematische Darstellung eines Fahrzeugs mit einem lastschaltbaren Mehrstufengetriebe gemäß einem Ausführungsbeispiel der vorliegenden Erfindung;
Fig. 2 ein Getriebeschema eines 9-Gang-Mehrstufengetriebes gemäß einem Ausführungsbeispiel der vorliegenden Erfindung.
Fig.3 ein beispielhaftes Schaltschema eines Mehrstufengetriebes gemäß einem Ausführungsbeispiel der vorliegenden Erfindung;
Fig. 4 Ausführungsvarianten eines ersten Hauptsystems eines Mehrstufengetriebes gemäß einem Ausführungsbeispiel der vorliegenden Erfindung;
Figuren 5 bis 8 schematische Darstellungen des ersten Hauptsystems gemäß Ausführungsbeispielen der vorliegenden Erfindung;
Fig.9 Darstellung eines zweiten Hauptsystems gemäß einem nicht erfindungsgemäßen Ausführungsbeispiel;
Fig. 10 Ausführungsvarianten des zweiten Hauptsystems eines Mehrstufengetriebes gemäß einem nicht erfindungsgemäßen Ausführungsbeispiel;
Fig 11 ein Getriebeschema des zweiten Hauptsystems gemäß einem nicht erfindungsgemäßen weiteren Ausführungsbeispiel;
Fig. 12 eine schematische Darstellung des ersten Hauptsystems mit einer Leistungsquelle gemäß einem Ausführungsbeispiel der vorliegenden Erfindung; und
Fig. 13 eine schematische Darstellung eines Mehrstufengetriebes mit einer Leistungsquelle gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

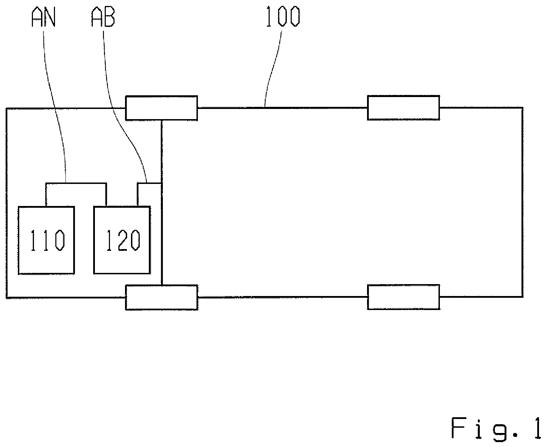

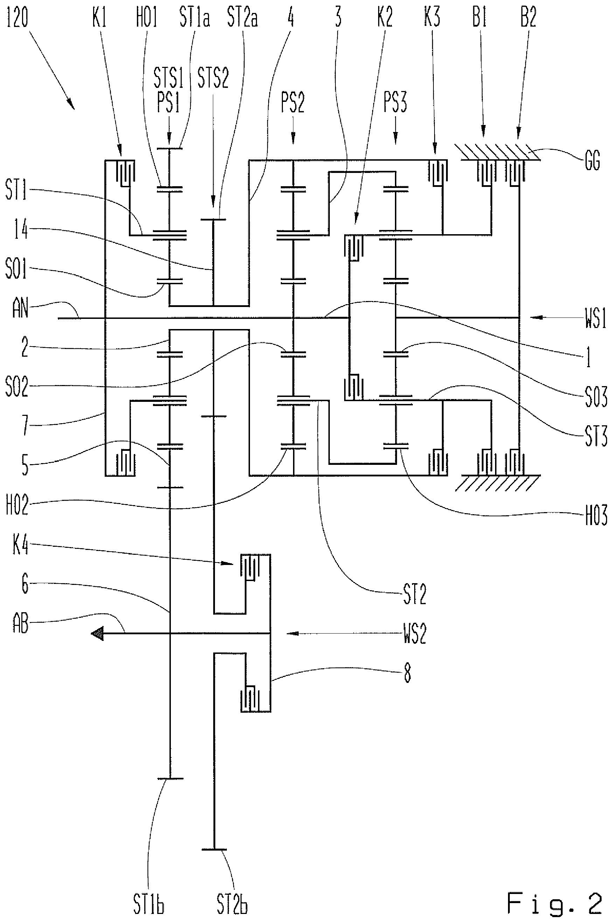

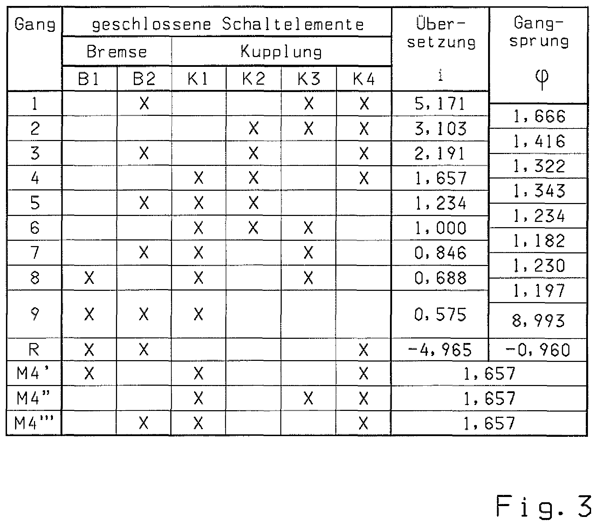

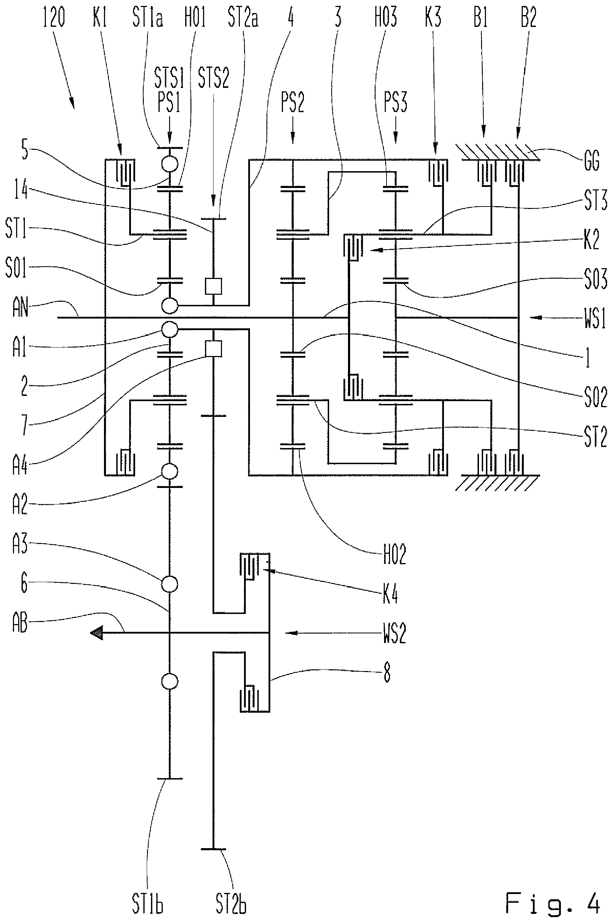

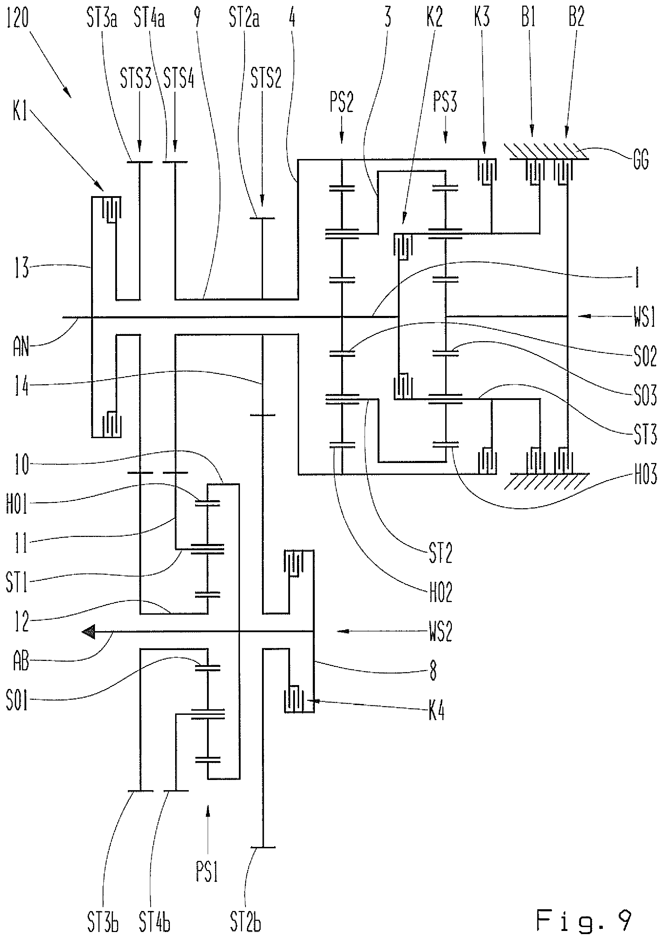

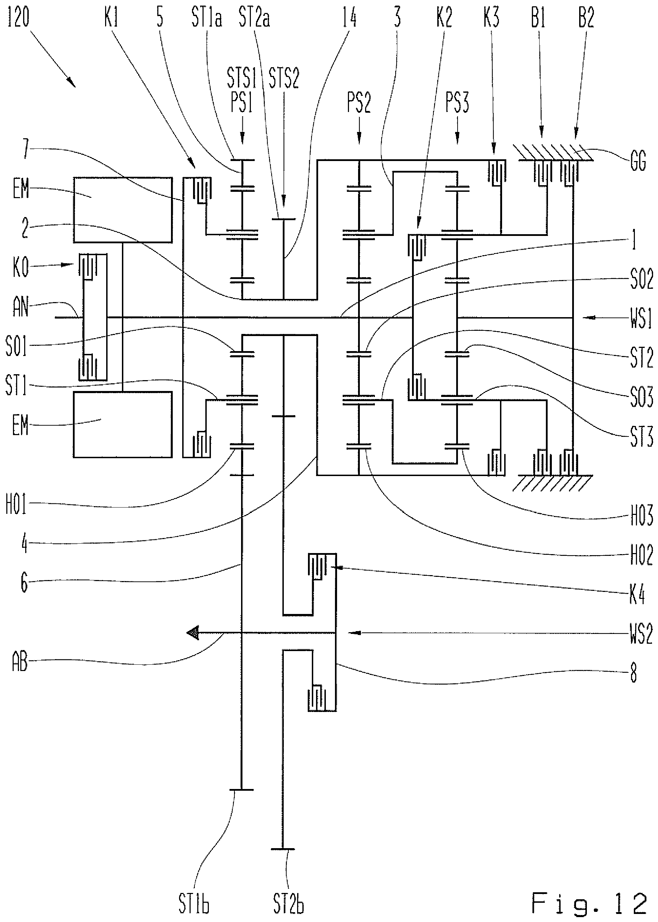

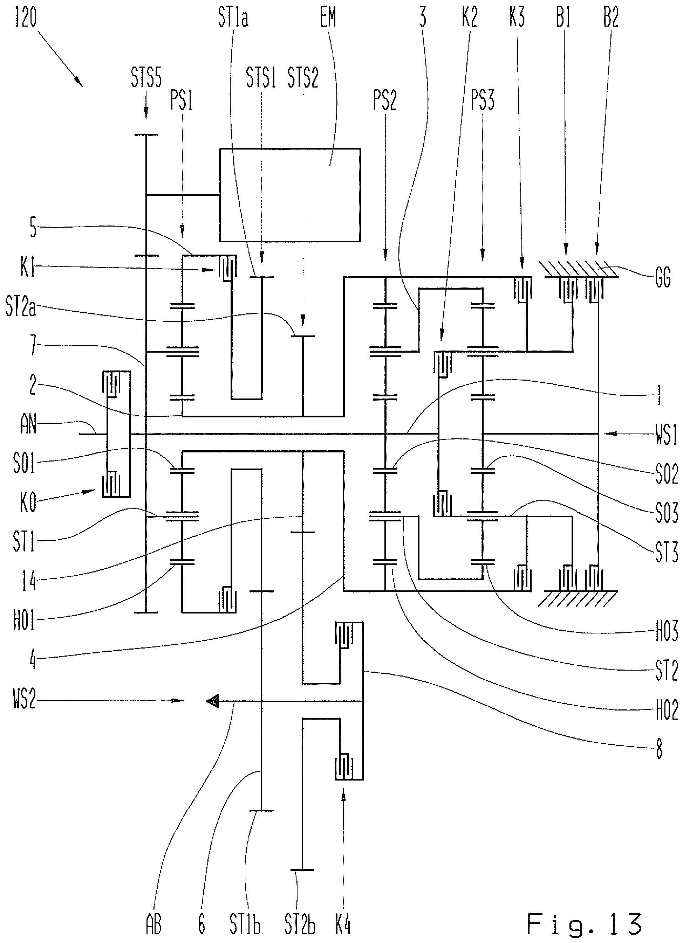

Im Nachfolgenden wird anhand von Fig. 1 ein Überblick über den Einsatz eines lastschaltbaren Mehrstufengetriebes gegeben. Anschließend wird in Fig. 2 ein erstes Hauptsystem eines lastschaltbaren Mehrstufengetriebes als ein Ausführungsbeispiel der vorliegenden Erfindung vorgestellt und später anhand der Figuren 4 bis 8 in unterschiedlichen Verblockungsvarianten beschrieben. Ein zweites Hauptsystem eines lastschaltbaren Mehrstufengetriebes und unterschiedliche Anordnungs- und Verblockungsvarianten hiervon werden in den Figuren 9 bis 11 dargestellt. Die Figuren 12 und 13 zeigen eine Hybridisierung eines lastschaltbaren Mehrstufengetriebes am Beispiel des ersten Hauptsystems. Fig. 3 zeigt eine Schaltmatrix für ein erfindungsgemäßes lastschaltbares Mehrstufengetriebe.

Fig. 1 zeigt eine schematische Darstellung eines Fahrzeugs 100 mit einem Motor 110 und einem lastschaltbaren Mehrstufengetriebe 120 in Planetenbauweise gemäß einem Ausführungsbeispiel der vorliegenden Erfindung. Das lastschaltbare Mehrstufengetriebe 120, auch Planetenlastschaltgetriebe oder Lastschalteinheit genannt, ist gemäß diesem Ausführungsbeispiel in Frontquer-Bauweise in dem Fahrzeug 100 eingebaut. Der Motor 110, beispielsweise ein Verbrennungsmotor, ist mittels einer Antriebswelle AN mit dem lastschaltbaren Mehrstufengetriebe 120 verbunden. Eine Abtriebswelle AB des lastschaltbaren Mehrstufengetriebes 120 verbindet das lastschaltbare Mehrstufengetriebe 120 mit der Vorderachse des Fahrzeugs 100, um das Fahrzeug 100 anzutreiben.

Gemäß einem Ausführungsbeispiel umfasst das lastschaltbare Mehrstufengetriebe 120 genannt, drei Planetenradsätze, zwei beziehungsweise drei Stirnradstufen und sechs Schaltelemente, davon vier Kupplungen und zwei Bremsen, wobei zwei Schaltelemente gleichzeitig zu schalten sind. Das lastschaltbare Mehrstufengetriebe 120 weist keine festen Gehäusekopplungen auf und kann neun Vorwärtsgänge und einen Rückwärtsgang schalten. Als Anfahrelement kann ein hydrodynamischer Drehmomentwandler, eine hydrodynamische Kupplung, eine zusätzliche Anfahrkupplung, eine integrierte Anfahrkupplung oder -bremse, eine zusätzliche elektrische Maschine oder eine Powershuttle-Einheit beziehungsweise PowerReversier-Einheit dienen.

Fig. 2 zeigt ein Getriebeschema eines lastschaltbaren Mehrstufengetriebes 120 gemäß einem Ausführungsbeispiel der vorliegenden Erfindung. Das Ausführungsbeispiel zeigt eine als erstes Hauptsystem bezeichnete Ausführungsform eines Mehrstufengetriebes 120. Bei dem lastschaltbaren Mehrstufengetriebe 120 kann es sich um das anhand von Fig. 1 gezeigte Mehrstufengetriebe 120 handeln. Das Mehrstufengetriebe 120, auch Planetenlastschaltgetriebe genannt, ist gemäß diesem Ausführungsbeispiel als ein 9-Gang-Mehrstufengetriebe realisiert.

Das Mehrstufengetriebe 120 umfasst zwei parallele Wellenstränge WS1, WS2, sechs Schaltelemente K1, K2, K3, K4, B1, B2, zwei Stirnradstufen STS1, STS2 und drei Planetenradsätze PS1, PS2, PS3, die alle in einem Gehäuse GG des Mehrstufengetriebes 120angeordnet sind. Alle drei Planetenradsätze PS1, PS2, PS3 sind in diesem Ausführungsbeispiel als einfache Minus-Planetenradsätze ausgebildet, deren jeweiliges Hohlrad HO1, HO2, HO3 bei festgehaltenem Steg ST1, ST2, ST3 in zum Sonnenrad SO1, SO2, SO3 entgegengesetzter Richtung rotiert. Ein Minus-Planetenradsatz weist bekanntlich an einem Planetenträger verdrehbar gelagerte Planetenräder auf, die mit Sonnenrad und Hohlrad dieses Planetenradsatzes kämmen. Die drei Planetenradsätze PS1, PS2, PS3 sind in axialer Richtung in der Reihenfolge "PS1, PS2, PS3" koaxial hintereinander auf dem ersten Wellenstrang WS1 der zwei parallelen Wellenstränge WS1, WS2 angeordnet.

Ein erstes Stirnrad ST1a einer ersten Stirnradstufe STS1 der zwei Stirnradstufen STS1, STS2 und ein erstes Stirnrad ST2a einer zweiten Stirnradstufe STS2 der zwei Stirnradstufen STS1, STS2 sind koaxial hintereinander auf dem ersten Wellenstrang WS1 zwischen dem ersten Planetenradsatz PS1 und dem zweiten Planetenradsatz PS2 angeordnet.

Die Antriebswelle AN ist auf dem ersten Wellenstrang WS1 angeordnet, die Abtriebswelle AB ist auf einem zweiten Wellenstrang WS2 der zwei parallelen Wellenstränge WS1, WS2 angeordnet. Weiterhin sind die beiden Wellenstränge WS1, WS2 über die zwei Stirnradstufen STS1, STS2 miteinander verbunden.

Die Schaltelemente K1, K2, K3, K4 sind als Kupplungen ausgebildet, die zwei Schaltelemente B1, B2 sind als Bremsen ausgebildet und werden im Folgenden teilweise auch als solche bezeichnet. Durch ein selektives Eingreifen der sechs Schaltelemente K1, K2, K3, K4, B1, B2 sind verschiedene Übersetzungsverhältnisse zwischen der Antriebswelle AN und der Abtriebswelle AB bewirkbar. Auf diese Weise sind zumindest neun Vorwärtsgänge und zumindest ein Rückwärtsgang realisierbar.

Im Folgenden wird eine Kopplung der einzelnen Elemente der drei Planetenradsätze PS1, PS2, PS3 untereinander, zu den beiden Stirnradstufen STS1, STS2 und zur Antriebswelle AN und zur Abtriebswelle AB beschrieben.

Das Mehrstufengetriebe 120weist zumindest neun Verbindungselemente auf, die mit 1 bis 8 sowie 14 bezeichnet sind. Die Verbindungselemente 1, 2, 3, 4, 5, 6, 7, 8, 14 können als Wellen ausgebildet sein, wobei innerhalb der Verbindungselemente 1, 2, 3, 4, 5, 6, 7, 8, 14 jeweils auch ein oder mehrere Schaltelemente angeordnet sein können, wie es nachfolgend noch detaillierter ausgeführt wird.

Wie in Fig. 2 gezeigt, sind ein Sonnenrad SO2 eines zweiten Planetenradsatzes PS2 der drei Planetenradsätze PS1, PS2, PS3 und die Antriebswelle AN verdrehfest miteinander verbunden und bilden ein erstes Verbindungselement 1. Ein Sonnenrad SO1 eines ersten Planetenradsatzes PS1 der drei Planetenradsätze PS1, PS2, PS3, ein Stirnrad STS2a einer zweiten Stirnradstufe STS2 sowie ein Hohlrad HO2 des zweiten Planetenradsatzes PS2 sind über ein zweites, ein viertes und ein vierzehntes Verbindungselement 2, 4, 14 miteinander verbunden. Das zweite, vierte und vierzehnte Verbindungselement 2, 4, 14 weisen einen gemeinsamen Verbindungspunkt auf. Das zweite Verbindungselement 2 ist mit dem Sonnenrad SO1 des ersten Planetenradsatzes PS1 verbunden. Das vierte Verbindungselement 4 ist mit dem Hohlrad HO2 des zweiten Planetenradsatzes PS2 verbunden. Das vierzehnte Verbindungselement 14 ist mit dem ersten Stirnrad ST2a der zweiten Stirnradstufe STS2 verbunden. Ein Hohlrad HO3 eines dritten Planetenradsatzes PS3 der drei Planetenradsätze PS1, PS2, PS3 und der Steg ST2 des zweiten Planetenradsatzes PS2 sind verdrehfest miteinander verbunden und bilden ein drittes Verbindungselement. Das zweite Verbindungselement 2 und das vierte Verbindungselement 4 sind miteinander verbunden, sodass auch zwischen dem Hohlrad HO2 des zweiten Planetenradsatzes PS2 und dem Sonnenrad SO1 des ersten Planetenradsatzes PS1 eine Verbindung besteht. Das erste Stirnrad ST1a der ersten Stirnradstufe STS1 ist mit einem Hohlrad HO1 des ersten Planetenradsatzes PS1 verbunden und bildet ein fünftes Verbindungselement 5. Ein zweites Stirnrad ST1b der ersten Stirnradstufe STS1 und die Abtriebswelle AB sind verbunden und bilden ein sechstes Verbindungselement 6. Ein Steg ST1 des ersten Planetenradsatzes PS1 ist mit der Antriebswelle AN verbunden und bildet ein siebtes Verbindungselement 7. Ein zweites Stirnrad ST2b der zweiten Stirnradstufe STS2 und die Abtriebswelle AB sind verbunden und bilden ein achtes Verbindungselement 8.

Das siebte Verbindungselement 7 weist ein erstes Schaltelement K1 der sechs Schaltelemente K1, K2, K3, K4, B1, B2 auf, wobei das erste Schaltelement K1 im Kraftfluss zwischen der Antriebswelle AN und dem Steg ST1 des ersten Planetenradsatzes PS1 angeordnet ist. Ein zweites Schaltelement K2 der sechs Schaltelemente K1, K2, K3, K4, B1, B2 ist im Kraftfluss zwischen der Antriebswelle AN und einem Steg ST3 des dritten Planetenradsatzes PS3 angeordnet. Ein drittes Schaltelement K3 der sechs Schaltelemente K1, K2, K3, K4, B1, B2 ist im Kraftfluss zwischen der verdrehfesten Verbindung von dem Hohlrad HO2 des zweiten Planetenradsatzes PS2 mit dem Stirnrad ST2a der zweiten Stirnradstufe STS2 und dem Steg ST3 des dritten Planetenradsatzes PS3 angeordnet. Das achte Verbindungselement 8 weist ein viertes Schaltelement K4 der sechs Schaltelemente K1, K2, K3, K4, B1, B2 auf, wobei das vierte Schaltelement K4 im Kraftfluss zwischen dem zweiten Stirnrad ST2b der zweiten Stirnradstufe STS2 und der Abtriebswelle AB angeordnet ist. Ein fünftes Schaltelement B1 der sechs Schaltelemente K1, K2, K3, K4, B1, B2 ist im Kraftfluss zwischen dem Steg ST3 des dritten Planetenradsatzes PS3 und einem Getriebegehäuse GG angeordnet. Ein sechstes Schaltelement B2 der sechs Schaltelemente K1, K2, K3, K4, B1, B2 ist im Kraftfluss zwischen dem Sonnenrad SO3 des dritten Planetenradsatzes PS3 und dem Getriebegehäuse GG angeordnet.

Entsprechend der räumlichen Anordnung der drei Planetenradsätze und der zwei ersten Stirnräder der zwei Stirnradstufen, in axialer Richtung gesehen in der Folge "PS1/ST1a, ST2a, PS2, PS3", verläuft das erste Verbindungselement 1 des Mehrstufengetriebes 120abschnittsweise zentrisch innerhalb des zweiten Verbindungselements 2 und des vierten Verbindungselements 4. Weiterhin umgreift das siebte Verbindungselement mit dem ersten Schaltelement K1 die Antriebswelle AN beziehungsweise das erste Verbindungselement 1 in axialer Richtung. Das dritte Verbindungselement 3 umgreift das zweite Schaltelement K2 in axialer Richtung vollständig. Das erste Stirnrad ST1a der ersten Stirnradstufe ist radial über dem ersten Planetenradsatz PS1 angeordnet.

Das fünfte Schaltelement B1 und das sechste Schaltelement B2, also die beiden Bremsen B1, B2 sind in dem in Fig. 2 dargestellten Ausführungsbeispiel räumlich gesehen axial unmittelbar nebeneinander in einem Bereich außerhalb der Folge "PS1/ST1a, ST2a, PS2, PS3" neben dem dritten Planetenradsatz PS3 angeordnet. Dabei ist das fünfte Schaltelement B1 zwischen dem dritten Planetenradsatz PS3 und dem sechsten Schaltelement B2 angeordnet. Das fünfte und das sechste Schaltelement B1, B2 sind mit dem Getriebegehäuse GG verbunden. Die kinematische Anbindung des fünften und sechsten Schaltelements B1, B2 an den dritten Planetenradsatz PS3 bedingt in diesem Anordnungsbeispiel, dass das Schaltelement B1 näher am dritten Planetenradsatz PS3 als das Schaltelement B2 angeordnet ist.

Die in Fig. 2 dargestellte räumliche Anordnung der Schaltelemente B1, B2 ist als beispielhaft zu verstehen. So kann das Schaltelement B1 beispielsweise auch zumindest teilweise radial über dem Schaltelement B2 angeordnet sein oder alternativ das sechste Schaltelement B2 in den Bereich der Rotationsachse des ersten Wellenstrangs WS1 angeordnet sein.

In dem in Fig. 2 dargestellten Ausführungsbeispiel ist das dritte Schaltelement K3 axial unmittelbar neben dem fünften Schaltelement B1 angeordnet. Die Verbindung des Hohlrads HO2 des zweiten Planetenradsatzes PS2 mit dem dritten Schaltelement K3 umgreift das dritte Verbindungselement 3, das zweite Schaltelement K2 und den dritten Planetenradsatz PS3 in axialer Richtung vollständig. Die räumliche Anordnung der beiden zweiten Stirnräder ST1b, ST2b der beiden Stirnradstufen STS1, STS2 ist in axialer Richtung gesehen auf dem zweiten Wellenstrahlung WS2 in der Form "ST1b, ST2b". Das vierte Schaltelement K4 grenzt unmittelbar axial an das zweite Stirnrad ST2b der zweiten Stirnradstufe STS2 an.

Die ersten vier Schaltelemente K1, K2, K3, K4, das heißt die vier Kupplungen, sind in einem Ausführungsbeispiel als reibschlüssig schaltbare Lammellenkupplungen ausgeführt, aber können selbstverständlich in einem weiteren Ausführungsbeispiel als formschlüssig schaltbare Klauenkupplung oder Konuskupplung ausgeführt sein. Die als Bremsen ausgeführten Schaltelemente B1, B2 sind in einem Ausführungsbeispiel als reibschlüssig schaltbare Lamellenbremsen ausgeführt, können gemäß anderen Ausführungsbeispielen jedoch auch als reibschlüssig schaltbare Bandbremse oder als formschlüssig schaltbare Klauen- oder Konusbremse ausgeführt sein.

Aus dem in Fig. 2 dargestellten Getriebe 120 lassen sich mehrere wirkungsgleiche Getriebevarianten ableiten. Für die Kupplung K1 des in Fig. 2 gezeigten Hauptsystems gibt es drei weitere wirkungsgleiche Anordnungsmöglichkeiten, für die Kupplung K4 eine weitere Anordnungsmöglichkeit. Dies ist in der folgenden Figur 4 im Detail ausgeführt.

Fig.3 zeigt ein beispielhaftes Schaltschema eines Mehrstufengetriebes gemäß einem Ausführungsbeispiel der vorliegenden Erfindung. Bei dem Mehrstufengetriebe, beziehungsweise Planetenlastschaltgetriebe, kann es sich um eines der in den vorangegangen bzw. nachfolgend beschriebenen Mehrstufengetrieben handeln.

Von links nach rechts gesehen sind in der ersten Spalte der in Fig. 3 gezeigten Tabelle Gangstufen angegeben, die jeweils einen Gang des Mehrstufengetriebes bezeichnen. In den folgenden sechs Spalten, reserviert für die sechs Schaltelemente B1, B2, K1, K2, K3, K4, wie sie beispielsweise bereits anhand von Fig. 2 beschrieben wurden, ist jeweils für ein geschlossenes Schaltelement B1, B2, K1, K2, K3, K4ein Kreuz in der Tabelle eingetragen. Dabei sind zuerst die beiden Bremsen B1 und B2 und nachfolgend die vier Kupplungen K1, K2, K3, K4 aufgelistet. Bei einem geschlossenen Schaltelement B1, B2, K1, K2, K3, K4 erfolgt eine Kraftübertragung über das jeweilige Schaltelement B1, B2, K1, K2, K3, K4. Dabei kann das jeweilige Schaltelement B1, B2, K1, K2, K3, K4 ein starres Verbindungselement ausbilden. Die vorletzte Spalte zeigt eine beispielhafte Übersetzung i, gefolgt von einem sich daraus ergebenden Gangsprung ϕ in der letzten Spalte. Die mit einem "x" gekennzeichneten geschlossenen Schaltelemente können auch mit dem englischsprachigen Ausdruck "engaged shifting elements" bezeichnet werden. Für jeden Gang sind drei der Schaltelemente B1, B2, K1, K2, K3, K4 offen und drei der Schaltelemente B1, B2, K1, K2, K3, K4 geschlossen.

Dem Schaltschema können neben der Schaltlogik auch beispielhafte Werte für die jeweiligen Übersetzungen i der einzelnen Gangstufen und die daraus zu bestimmenden Gangsprünge ϕ entnommen werden. Die angegebenen Übersetzungen i ergeben sich aus den (typischen) Standgetriebeübersetzungen der drei Planetenradsätze PS1, PS2, PS3 von minus 1,600 für den ersten Planetenradsatz PS1, minus 1,600 für den zweiten Planetenradsatz PS2 und minus 3,642 für den dritten Planetenradsatz sowie für die erste Stirnradstufe STS1 von 1,000 und für die zweite Stirnradstufe STS2 von 3,228. Die Standübersetzungen der Stirnradstufen sind dabei in einem konstruktionsbedingten Toleranzbereich veränderbar, ohne wesentliche Auswirkungen auf die Getriebeübersetzungen zu haben. Des weiteren kann dem Schaltschema entnommen werden, dass bei sequenzieller Schaltweise Doppelschaltungen beziehungsweise Gruppenschaltungen vermieden werden. Zwei benachbarte Gangstufen benutzen zwei der notwendigen drei Schaltelemente gemeinsam. Der sechste Gang ist vorzugsweise als direkter Gang ausgebildet. Die angegebenen Übersetzungen und daraus abgeleiteten Größen stellen eine bevorzugte Ausführungsform dar. Der Fachmann mag auch andere Werte hier entsprechend der Anforderungen an das Mehrstufengetriebe einsetzen.

Wie bereits, beispielsweise anhand von Fig. 2, beschrieben, bestehen die sechs Schaltelemente K1, K2, K3, K4, B1, B2 aus den vier Kupplungen K1, K2, K3, K4 und den zwei Bremsen B1, B2. In der folgenden Beschreibung wird für die ersten vier Schaltelemente K1, K2, K3, K4 die Bezeichnung Kupplung K1, K2, K3, K4 und für das fünfte und sechste Schaltelement B1, B2 die Bezeichnung Bremse B1, B2 gewählt.

Der erste Vorwärtsgang ergibt sich durch Schließen der Bremse B2 und der Kupplungen K3, K4, der zweite Vorwärtsgang durch Schließen der Kupplungen K2, K3, K4, der dritte Vorwärtsgang durch Schließen der Bremse B2 und der Kupplungen K2, K4, der vierte Vorwärtsgang durch Schließen der Kupplungen K1, K2, K4, der fünfte Vorwärtsgang durch Schließen der Bremse B2 und der Kupplungen K1, K2, der sechste Vorwärtsgang durch Schließen der Kupplungen K1, K2, K3, der siebte Vorwärtsgang durch Schließen der Bremse B2 und der Kupplungen K1, K3, der achte Vorwärtsgang durch Schließen der Bremse B1 und der beiden Kupplungen K1, K3 sowie der neunte Vorwärtsgang durch Schließen der beiden Bremsen B1, B2 und der Kupplung K1. Wie aus dem Schaltschema in Fig. 3 weiter ersichtlich, ergibt sich der Rückwärtsgang durch Schließen der beiden Bremsen B1, B2 und der Kupplung K4.

Die Übersetzung i kann auch mit dem Begriff "ratio" bezeichnet werden. Für den mit der Gangstufe 1 bezeichneten ersten Gang ergibt sich eine Übersetzung i von 5,531, für den mit der Gangstufe 2 bezeichneten zweiten Gang ergibt sich eine Übersetzung i von 3,228, für den dritten Gang ergibt sich eine Übersetzung i von 2,232, für den vierten Gang ergibt sich eine Übersetzung i von 1,619, für den fünften Gang ergibt sich eine Übersetzung i von 1,207, für den sechsten Gang ergibt sich eine direkte Übersetzung i von 1,000, für den siebten Gang ergibt sich eine Übersetzung i von 0,862, für den achten Gang ergibt sich eine Übersetzung i von 0,722 und für den neunten Gang ergibt sich eine Übersetzung i von 0,615. Wie aus dem Schaltschema weiter ersichtlich, ergibt sich für den Rückwärtsgang eine Übersetzung i von minus 5,165. Folglich ergibt sich von dem ersten Gang zum zweiten Gang ein Gangsprung ϕ, auch mit dem Begriff "step" bezeichnet, von 1,713, von dem zweiten Gang zum dritten Gang ein Gangsprung ϕ von 1,446, von dem dritten Gang zum vierten Gang ein Gangsprung ϕ von 1,379, von dem vierten Gang zum fünften Gang ein Gangsprung ϕ von 1,341, von dem fünften Gang zum sechsten Gang ein Gangsprung ϕ von 1,207, von dem sechsten Gang zum siebten Gang ein Gangsprung ϕ von 1,160, von dem siebten Gang zum achten Gang ein Gangsprung ϕ von 1,194, von dem achten Gang zum neunten Gang ein Gangsprung ϕ von 1,174. Somit weist das Getriebe eine Spreizung von 8,993 auf. Das Verhältnis von Rückwärtsgang zu dem ersten Gang beträgt minus 0,934 ist ist somit sehr nahe an einem idealen Wert von minus 1.

Die in der ersten Spalte aufgelisteten Mehrfachgänge M4', M4", M4''' sind weitere Schaltkombinationen, die ebenfalls den vierten Gang darstellen. Der erste Mehrfachgang M4' ergibt sich durch ein Schließen der Bremse B1 und der Kupplungen K1, K4, der zweite Mehrfachgang M4" ergibt sich durch ein Schließen der Kupplungen K1, K3, K4 und der dritte Mehrfachgang M4'" ergibt sich durch ein Schließen der Bremse B2 und der Kupplungen K1, K4.

Gemäß einem Ausführungsbeispiel der Erfindung ist ein Anfahren des Fahrzeugs, beispielsweise des in Fig. 1 gezeigten Fahrzeugs, mit einem im Getriebe integrierten Schaltelement möglich. Hierbei ist ein Schaltelement besonders geeignet, dass im ersten Vorwärtsgang und im Rückwärtsgang benötigt wird, hier also die Bremse B2 oder die Kupplung K4. Vorteilhafterweise wird die Kupplung K4 auch im zweiten Vorwärtsgang benötigt. Wird die Kupplung K4 als im Getriebe integriertes Anfahrelement genutzt, so ist damit sogar ein Anfahren in den ersten vier Vorwärtsgängen und dem Rückwärtsgang möglich.

Die Höhe der Standübersetzungen, und damit die Höhe der Getriebeübersetzungen, ist prinzipiell frei wählbar. Gemäß einem Ausführungsbeispiel sind bevorzugte Standübersetzungen des Hauptsystems für den ersten Planetensatz PS I -1,600, für den zweiten Planetensatz PS2 -1,600, für den dritten PlanetensatzPS3 -3,642 und für die Stirnradstufe STS1 (ST1a-ST1b) 1,000, für die zweite Stirnradstufe STS2 (ST2a-ST2b) 3,228 und für die in den in den Figuren 9 bis 11 gezeigten Ausführungsvarianten mit drei Stirnradstufen für die dritte Stirnradstufe STS3 (ST3a-ST3b) 1,000 sowie für die vierte Stirnradstufe STS4 (ST4a-ST4b) 1,000. Alle in den Figuren 1 und 3 bis 13 gezeigten Ausführungsbeispiele ergeben wirkungsgleiche Getriebevarianten, welche dieselbe Schaltmatrix verwenden können.

Im Folgenden sind in den Figuren 4 bis 8 mögliche Verblockungsvarianten des in Fig. 2 gezeigten Mehrstufengetriebes 120 dargestellt. Die räumliche Anordnung der Schaltelemente K1, K2, K3, K4, B1, B2 des in Fig. 2 dargestellten Ausführungsbeispiels eines Mehrstufengetriebes 120 kann innerhalb des Mehrstufengetriebes 120 im Prinzip beliebig sein und wird nur durch die Abmessungen und die äußere Formgebung des Getriebegehäuses GG begrenzt. Entsprechend sind in den folgenden Figuren beispielhaft Bauteil-Anordnungsvarianten des Mehrstufengetriebes 120 gemäß Fig. 2 dargestellt, wobei alle kinematischen Kupplungen der Planetenradsätze, Stirnradstufen, Schaltelemente und Wellen, beziehungsweise Verbindungselemente, untereinander unverändert aus Fig. 2 übernommen sind.

Fig. 4 zeigt eine Übersicht über Verblockungsvarianten des bereits anhand von Fig. 2 beschriebenen ersten Hauptsystems eines Mehrstufengetriebes 120 gemäß unterschiedlichen Ausführungsbeispielen der vorliegenden Erfindung.

Das in Fig. 4 dargestellte Getriebeschema entspricht dem in Fig. 2 dargestellten Getriebeschema eines Mehrstufengetriebes 120, aus welchem sich mehrere wirkungsgleiche Getriebevarianten ableiten lassen, wobei für das erste Schaltelement K1, beziehungsweise die Kupplung K1, drei weitere wirkungsgleiche Anordnungsvarianten und für das vierte Schaltelement K4, beziehungsweise die Kupplung K4, eine weitere Anordnungsvariante gezeigt ist.

Die drei Anordnungsvarianten für die Kupplung K1 sind in Fig. 4 mit A1, A2, A3 bezeichnet, die Anordnungsvariante für die Kupplung K4 ist mit A4 bezeichnet.

Eine erste Anordnungsvariante A1 der Kupplung K1 ist eine Anordnung der Kupplung K1 auf dem zweiten Verbindungselement 2 zwischen dem Sonnenrad SO1 des ersten Planetenradsatzes und dem vierten Verbindungselement 4. In der ersten Anordnungsvariante A1 ist das erste Schaltelement K1 im Kraftfluss zwischen dem Hohlrad HO2 des zweiten Planetenradsatzes PS2, dem ersten Stirnrad ST2a der zweiten Stirnradstufe STS2 und dem Sonnenrad SO1 des ersten Planetenradsatzes PS1 angeordnet.

Eine zweite Anordnungsvariante A2 der Kupplung K1 ist eine Anordnung der Kupplung K1 auf dem fünften Verbindungselement 5 zwischen dem Hohlrad HO1 des ersten Planetenradsatzes und dem ersten Stirnrad ST1a des ersten Stirnradsatzes STS1. In der zweiten Anordnungsvariante A2 ist das erste Schaltelement K1 im Kraftfluss zwischen einem Hohlrad HO1 des ersten Planetenradsatzes PS1 und einem ersten Stirnrad ST1a der ersten Stirnradstufe STS1 angeordnet.

Eine dritte Anordnungsvariante A3 der Kupplung K1 ist eine Anordnung der Kupplung K1 auf dem sechsten Verbindungselement 6 zwischen dem zweiten Stirnrad ST1b der ersten Stirnradstufe STS1 und der Abtriebswelle AB. In der dritten Anordnungsvariante A3 ist das erste Schaltelement K1 im Kraftfluss zwischen einem zweiten Stirnrad ST1b der ersten Stirnradstufe STS1 und der Abtriebswelle AB angeordnet.

In einer Anordnungsvariante A4 der Kupplung K4 weist das vierte Verbindungselement 4 die Kupplung K4 auf. In der Anordnungsvariante A4 der Kupplung K4 ist das vierte Schaltelement K4 im Kraftfluss zwischen dem Hohlrad HO2 des zweiten Planetenradsatzes PS2 und dem ersten Stirnrad ST2a der zweiten Stirnradstufe STS2 sowie dem Sonnenrad SO1 des ersten Planetenradsatzes PS1 angeordnet. Bei geöffneter Kupplung K4 in der Anordnungsvariante A4 wird das erste Stirnrad ST2a der zweiten Stirnradstufe von der Verbindung von Sonnenrad SO1 des ersten Planetenradsatzes PS1 und dem Hohlrad HO2 des zweiten Planetenradsatzes PS2 entkoppelt. In der vierten Anordnungsvariante A4 ist das vierte Schaltelement K4 im vierzehnten Verbindungselement angeordnet.

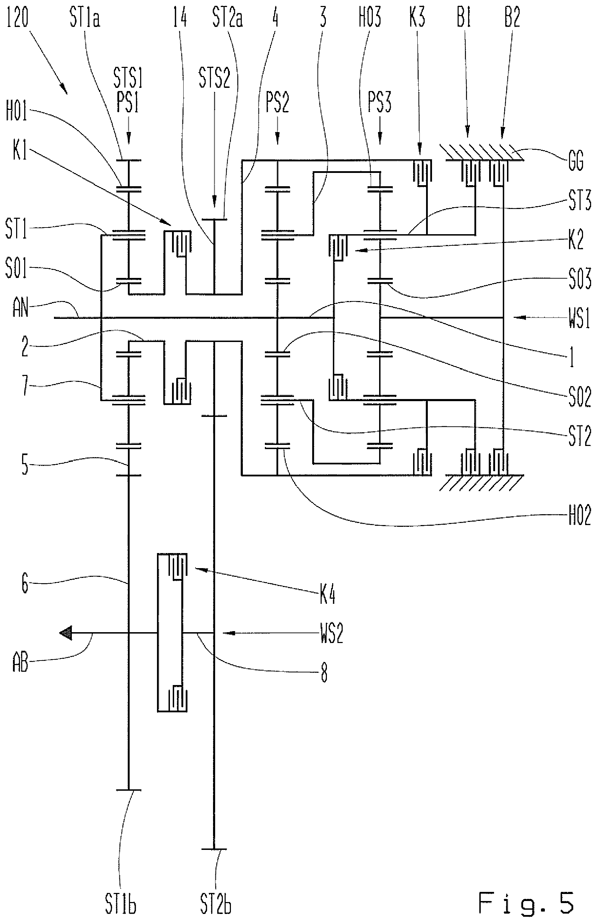

Wenn die Kupplung K1 gemäß der ersten Anordnungsvariante A1 im zweiten Verbindungselement 2 angeordnet ist, so stellt das siebte Verbindungselement 7 eine verdrehfeste Verbindung zwischen der Antriebswelle AN und dem Steg ST1 des ersten Planetenradsatzes PS1 her und das Sonnenrad SO1 des ersten Planetenradsatzes ist über die Kupplung K1 mit dem Steg ST2 des zweiten Planetenradsatzes koppelbar. Dabei sind alle acht Kombinationen der in Fig. 2 offenbarten Position für die Kupplung K1 und der drei Anordnungsvarianten A1, A2, A3 für die Kupplung K1 mit der in Fig. 2 offenbarten Position für die Kupplung K4 und der Anordnungsvariante A4 für die Kupplung K4 möglich. In den folgenden Figuren 5 bis 8 ist jeweils eine der möglichen Anordnungsvarianten A1, A2, A3, A4 für die Kupplungen K1 respektive K4 gezeigt.

Fig. 5 zeigt eine schematische Darstellung eines weiteren Ausführungsbeispiels des bereits anhand von Fig. 2 beschriebenen ersten Hauptsystems des Mehrstufengetriebes 120. Gezeigt ist die in Fig. 4 als A1 bezeichnete erste Anordnungsvariante für die Kupplung K1. Dabei wurde im Vergleich zu dem in Fig. 4 dargestellten Getriebe die erste Stirnradstufe STS1 zusammen mit dem ersten Planetenradsatz PS1 axial verschoben, sodass die Kupplung K1 zwischen dem ersten Planetenradsatz PS1 und der zweiten Stirnradstufe STS2 räumlich angeordnet werden kann. Die vierte Kupplung K4 ist räumlich verändert im Vergleich zu dem in Fig.2 dargestellten Mehrstufengetriebe und zwischen den beiden Stirnradstufen STS1, STS2 angeordnet.

In dem in Fig. 5 gezeigten Ausführungsbeispiel ist der Steg ST2 des ersten Planetenradsatzes PS1 verdrehfest mit der Antriebswelle AN beziehungsweise mit dem ersten Verbindungselement 1 und somit dem Sonnenrad SO2 des zweiten Planetenradsatzes PS2 verbunden. Über die Kupplung K1 können das Sonnenrad SO1 des ersten Planetenradsatzes PS1 und der Steg ST2 des zweiten Planetenradsatzes PS2 sowie das erste Stirnrad ST2a der zweiten Stirnradstufe STS2 miteinander gekoppelt werden. In dem in Fig. 5 gezeigten Ausführungsbeispiel ist die Kupplung K4 zwischen dem zweiten Stirnrad ST1b der ersten Stirnradstufe STS1 und dem zweiten Stirnrad ST2b der zweiten Stirnradstufe STS2 angeordnet.

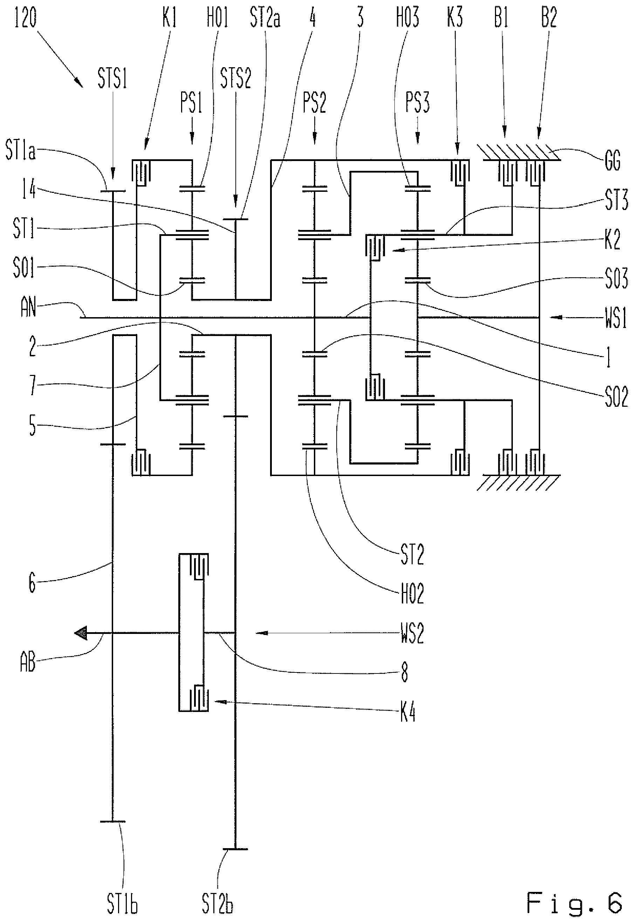

Fig. 6 zeigt eine schematische Darstellung eines weiteren Anordnungsbeispiels des bereits anhand von Fig. 2 beschriebenen ersten Hauptsystems des Mehrstufengetriebes 120. Gezeigt ist die in Fig. 4 als A2 bezeichnete zweite Anordnungsvariante für die Kupplung K1.

In dem in Fig. 6 gezeigten Ausführungsbeispiel wurde im Vergleich zu dem in Fig. 4 und Fig. 5 dargestellten Getriebe 120 die erste Stirnradstufe STS1 axial verschoben und auf der gegenüberliegenden Seite von dem ersten Planetenradsatz PS1 in Bezug auf den zweiten Planetenradsatz PS2 angeordnet. Durch die axiale Verschiebung der ersten Stirnradstufe STS1 verläuft das siebte Verbindungselement 7 zentrisch innerhalb des fünften Verbindungselementes 5. Die Anordnung des vierten Schaltelements K4 entspricht der bereits in Fig. 5 gezeigten Anordnungsvariante. Die Antriebswelle AN ist verdrehfest mit dem Steg ST1 des ersten Planetenradsatzes PS1 verbunden. Das Sonnenrad SO1 des ersten Planetenradsatzes PS1 ist verdrehfest mit dem Steg ST2 des zweiten Planetenradsatzes PS2 verbunden. Das erste Stirnrad ST1a der ersten Stirnradstufe STS1 ist mit dem Hohlrad HO1 des ersten Planetenradsatzes PS1 über das erste Schaltelement K1 koppelbar.

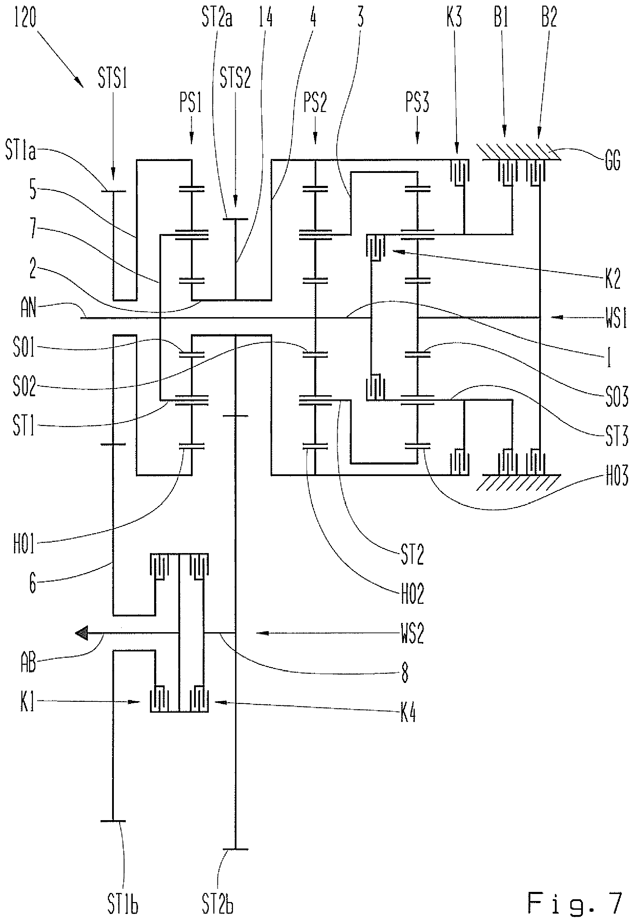

Fig. 7 zeigt eine schematische Darstellung eines weiteren Anordnungsbeispiels des bereits anhand von Fig. 2 beschriebenen ersten Hauptsystems des Mehrstufengetriebes 120. Gezeigt ist die in Fig. 4 als A3 bezeichnete dritte Anordnungsvariante für die erste Kupplung K1.

In dem in Fig. 7 gezeigten Ausführungsbeispiel ist das zweite Stirnrad ST1b der ersten Stirnradstufe STS1 über die Kupplung K1 mit der Abtriebswelle AB koppelbar. Die Anordnung der ersten Stirnradstufe STS1 und der vierten Kupplung K4 entspricht der bereits in den Figuren 5 und 6 gezeigten Anordnungsvariante. Die Kupplung K1 und die Kupplung K4 sind nebeneinander angeordnet, wobei ein Kupplungselement der beiden Kupplungen K1, K4 mit der Abtriebswelle AB verdrehfest verbunden ist. Das erste Stirnrad ST1a der ersten Stirnradstufe STS1 ist verdrehfest mit dem Hohlrad HO1 des ersten Planetenradsatzes PS1 verbunden.

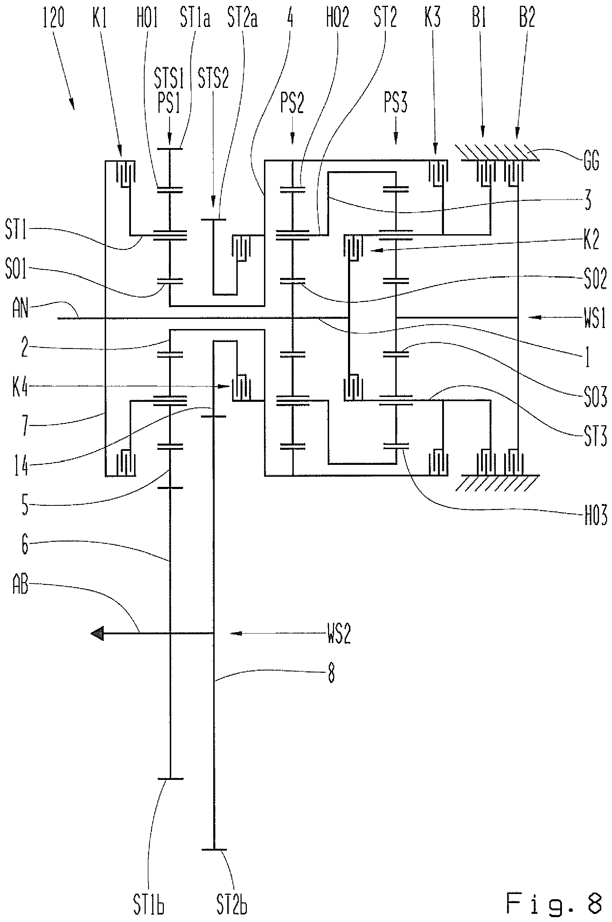

Fig. 8 zeigt eine schematische Darstellung eines weiteren Anordnungsbeispiels des bereits anhand von Fig. 2 beschriebenen ersten Hauptsystems des Mehrstufengetriebes 120. Gezeigt ist die in Fig. 4 als A4 bezeichnete Anordnungsvariante für die vierte Kupplung K4 gezeigt.

In dem in Fig. 8 gezeigten Ausführungsbeispiel ist die Kupplung K4 zwischen dem ersten Stirnrad ST2a der zweiten Stirnradstufe STS2 und der verdrehfesten Verbindung des Hohlrads HO2 des zweiten Planetenradsatzes PS2 und dem Sonnenrad SO1 des ersten Planetenradsatzes PS1 angeordnet. Somit sind das erste Stirnrad ST2a der zweiten Stirnradstufe STS2 und das Hohlrad HO2 des zweiten Planetenradsatzes PS2 sowie das Sonnenrad SO1 des ersten Planetenradsatzes PS1 über die Kupplung K4 koppelbar. In dieser Anordnungsvariante ist das zweite Stirnrad ST2b der zweiten Stirnradstufe STS2 verdrehfest mit der Abtriebswelle AB verbunden. Die Getriebeelemente und Kopplungen, die hier nicht weiter aufgeführt sind, entsprechend der Darstellung in Fig. 4.

Das in den Figuren 2 und 4 bis 8 gezeigte lastschaltbare Mehrstufengetriebe 120 kann wirkungsgleich durch eine Anordnung des ersten Planetenradsatzes PS1 auf der Abtriebswelle AB realisiert werden. Die folgenden Figuren 9 bis 11 zeigen zwei Anordnungsvarianten und mögliche alternative Verblockungsvarianten eines erfindungsgemäßen Mehrstufengetriebes 120 mit einem Planetenradsatz auf der Abtriebswelle AB. Ein solches Mehrstufengetriebe 120 wird im Folgenden als zweites Hauptsystem bezeichnet.

Fig. 9 zeigt ein Getriebeschema eines lastschaltbaren Mehrstufengetriebes 120 gemäß einem Ausführungsbeispiel eines nicht erfindungsgemäßen Getriebes. Das Ausführungsbeispiel basiert auf dem genannten zweiten Hauptsystem eines Mehrstufengetriebes 120. Bei dem lastschaltbaren Mehrstufengetriebe 120 kann es sich um das anhand von Fig. 1 gezeigte Mehrstufengetriebe 120 handeln. Das Mehrstufengetriebe 120, auch Planetenlastschaltgetriebe genannt, ist gemäß diesem Ausführungsbeispiel als ein 9-Gang-Mehrstufengetriebe realisiert.

Im Vergleich zu dem in den Figuren 2 und 4 bis 8 gezeigten Ausführungsbeispielen eines Mehrstufengetriebes 120 weist das in Fig. 9 gezeigte Mehrstufengetriebe 120 keine erste Stirnradstufe STS1, dafür jedoch neben der bereits anhand von Fig. 2 beschriebenen zweiten Stirnradstufe STS2 zwei zusätzliche Stirnradstufen STS3, STS4 auf. Somit werden anstelle von zwei Stirnradstufen STS1, STS2, wie beispielsweise in Fig. 2 für das erste Hauptsystem gezeigt, nun drei Stirnradstufen STS2, STS3, STS4 eingesetzt werden. In diesem Ausführungsbeispiel ist der erste Planetenradsatz PS1 auf der Abtriebswelle AB positioniert.

Das in Fig. 9 gezeigte Mehrstufengetriebe 120 umfasst zwei parallele Wellenstränge WS1, WS2, sechs Schaltelemente K1, K2, K3, K4, B1, B2, drei Stirnradstufen STS2, STS3, STS4 und drei Planetenradsätze PS1, PS2, PS3, die alle in einem Gehäuse GG des Planetenlastschaltgetriebes 120 angeordnet sind. Alle drei Planetenradsätze PS1, PS2, PS3 sind in diesem Ausführungsbeispiel als einfache Minus-Planetenradsätze ausgebildet, deren jeweiliges Hohlrad HO1, HO2, HO3 bei festgehaltenem Steg ST1, ST2, ST3 in zum Sonnenrad SO1, SO2, SO3 entgegengesetzter Richtung rotiert. Der zweite und dritte Planetenradsatz PS2, PS3 sind in axialer Richtung in der Reihenfolge "PS2, PS3" koaxial hintereinander auf dem ersten Wellenstrang WS1 der zwei parallelen Wellenstränge WS1, WS2 angeordnet.

Ein erstes Stirnrad ST3a einer dritten Stirnradstufe STS3 der drei Stirnradstufen STS2, STS3, STS4, ein erstes Stirnrad ST4a der vierten Stirnradstufe STS4 und ein erstes Stirnrad ST2a einer zweiten Stirnradstufe STS2 der drei Stirnradstufen STS2, STS3, STS4 sind koaxial hintereinander auf dem ersten Wellenstrang WS1 vor dem zweiten Planetenradsatz PS2 angeordnet. Somit ergibt sich eine Reihenfolge von "ST3a, ST4a, ST2a, PS2, PS3".

Die Antriebswelle AN ist auf dem ersten Wellenstrang WS1 angeordnet, die Abtriebswelle AB ist auf einem zweiten Wellenstrang WS2 der zwei parallelen Wellenstränge WS1, WS2 angeordnet. Weiterhin sind die beiden Wellenstränge WS1, WS2 über die drei Stirnradstufen STS2, STS3, STS4 miteinander verbunden.

Die Schaltelemente K1, K2, K3, K4 sind als Kupplungen ausgebildet, die zwei Schaltelemente B1, B2 sind als Bremsen ausgebildet und werden im Folgenden teilweise auch als solche bezeichnet. Durch ein selektives Eingreifen der sechs Schaltelemente K1, K2, K3, K4, B1, B2 sind verschiedene Übersetzungsverhältnisse zwischen der Antriebswelle AN und der Abtriebswelle AB bewirkbar. Auf diese Weise sind zumindest neun Vorwärtsgänge und zumindest ein Rückwärtsgang realisierbar.

Im Folgenden wird eine Kopplung der einzelnen Elemente der drei Planetenradsätze PS1, PS2, PS3 untereinander, zu den drei Stirnradstufen STS2, STS3, STS4 und zur Antriebswelle AN und zur Abtriebswelle AB beschrieben.

Das Planetenlastschaltgetriebe 120 weist zumindest neun Verbindungselemente auf, die mit 1, 3, 4, 8, 9, 10, 11, 12 13 bezeichnet sind. Die Verbindungselemente 1, 3, 4, 8, 9, 10, 11, 12 13 können als Wellen ausgebildet sein, wobei innerhalb der Verbindungselemente 1, 3, 4, 8, 9, 10, 11, 12 13 auch Schaltelemente, insbesondere Kupplungen, angeordnet sein können, wie es nachfolgend noch detaillierter ausgeführt wird.

Wie in Fig. 9 gezeigt, sind ein Sonnenrad SO2 eines zweiten Planetenradsatzes PS2 der drei Planetenradsätze PS1, PS2, PS3 und die Antriebswelle AN verdrehfest miteinander verbunden und bilden ein erstes Verbindungselement 1. Ein Hohlrad HO3 eines dritten Planetenradsatzes PS3 der drei Planetenradsätze PS1, PS2, PS3 und der Steg ST2 des zweiten Planetenradsatzes PS2 sind verdrehfest miteinander verbunden und bilden ein drittes Verbindungselement 3. Ein Hohlrad HO2 des zweiten Planetenradsatzes PS2 ist mit dem ersten Stirnrad ST2a der zweiten Stirnradstufe STS2 verbunden. Ein zweites Stirnrad ST2b der zweiten Stirnradstufe STS2 und die Abtriebswelle AB sind verbunden und bilden ein achtes Verbindungselement 8. In dem achten Verbindungselement 8 ist das vierte Schaltelement K4 angeordnet. Ein erstes Stirnrad ST4a der vierten Stirnradstufe STS4 ist mit dem Hohlrad HO2 des zweiten Planetenradsatzes PS2 verbunden. Wie implizit beschrieben sind das erste Stirnrad ST4a der vierten Stirnradstufe STS4, das erste Stirnrad ST2a der zweiten Stirnradstufe STS2 und das Hohlrad HO2 des zweiten Planetenradsatzes PS2 miteinander verbunden, wodurch ein viertes, ein neuntes und ein vierzehntes Verbindungselement 4, 9, 14 entstehen. Jedes der Verbindungselemente 4, 9, 14 verbindet einen gemeinsamen Verbindungspunkt mit dem ersten Stirnrad ST4a der vierten Stirnradstufe STS4, dem ersten Stirnrad ST2a der zweiten Stirnradstufe STS2 respektive dem Hohlrad HO2 des zweiten Planetenradsatzes PS2. Dabei schafft das vierte Verbindungselement eine Verbindung zwischen dem gemeinsamen Verbindungspunkt und dem Hohlrad HO2 des zweiten Planetenradsatzes. Das neunte Verbindungselement schafft eine Verbindung zwischen dem gemeinsamen Verbindungspunkt und dem ersten Stirnrad ST4a der vierten Stirnradstufe STS4 und das vierzehnte Verbindungselement 14 schafft eine Verbindung zwischen dem gemeinsamen Verbindungspunkt und dem ersten Stirnrad ST2a der zweiten Stirnradstufe STS2. Das Hohlrad HO1 des ersten Planetenradsatzes PS1 ist verdrehfest mit der Abtriebswelle AB verbunden und bildet ein zehntes Verbindungselement 10. Der Steg ST1 des ersten Planetenradsatzes PS1 ist mit dem zweiten Stirnrad ST4b der vierten Stirnradstufe STS4 verbunden und bildet ein elftes Verbindungselement 11. Das Sonnenrad SO1 des ersten Planetenradsatzes PS1 ist mit dem zweiten Stirnrad ST3b der dritten Stirnradstufe STS3 verbunden und bildet ein zwölftes Verbindungselement 12. Die Antriebswelle AN ist über das erste Schaltelement K1, hier die Kupplung K1, mit dem ersten Stirnrad ST3a der dritten Stirnradstufe STS3 verbunden, beziehungsweise koppelbar und bildet ein dreizehntes Verbindungselement 13.

Das dreizehnte Verbindungselement 13 weist das erste Schaltelement K1 der sechs Schaltelemente K1, K2, K3, K4, B1, B2 auf, wobei das erste Schaltelement K1 im Kraftfluss zwischen der Antriebswelle AN und ersten Stirnrad ST3a des dritten Stirnradsatzes STS3 angeordnet ist. Ein zweites Schaltelement K2 der sechs Schaltelemente K1, K2, K3, K4, B1, B2 ist im Kraftfluss zwischen der Antriebswelle AN und einem Steg ST3 des dritten Planetenradsatzes PS3 angeordnet. Ein drittes Schaltelement K3 der sechs Schaltelemente K1, K2, K3, K4, B1, B2 ist im Kraftfluss zwischen dem vierten Verbindungselement 4 von dem Hohlrad HO2 des zweiten Planetenradsatzes PS2 mit dem ersten Stirnrad ST2a der zweiten Stirnradstufe STS2 und dem Steg ST3 des dritten Planetenradsatzes PS3 angeordnet. Das achte Verbindungselement 8 weist ein viertes Schaltelement K4 der sechs Schaltelemente K1, K2, K3, K4, B1, B2 auf, wobei das vierte Schaltelement K4 im Kraftfluss zwischen dem zweiten Stirnrad ST2b der zweiten Stirnradstufe STS2 und der Abtriebswelle AB angeordnet ist. Ein fünftes Schaltelement B1, hier die Bremse B1 der sechs Schaltelemente K1, K2, K3, K4, B1, B2 ist im Kraftfluss zwischen dem Steg ST3 des dritten Planetenradsatzes PS3 und einem Getriebegehäuse GG angeordnet. Ein sechstes Schaltelement B2 der sechs Schaltelemente K1, K2, K3, K4, B1, B2 ist im Kraftfluss zwischen dem Sonnenrad SO3 des dritten Planetenradsatzes PS3 und dem Getriebegehäuse GG angeordnet.

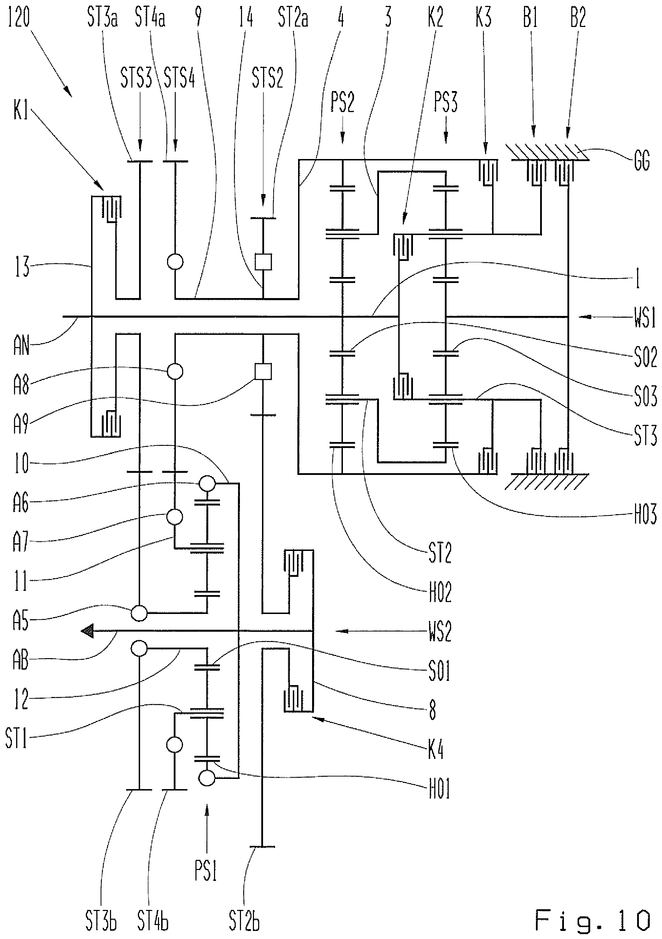

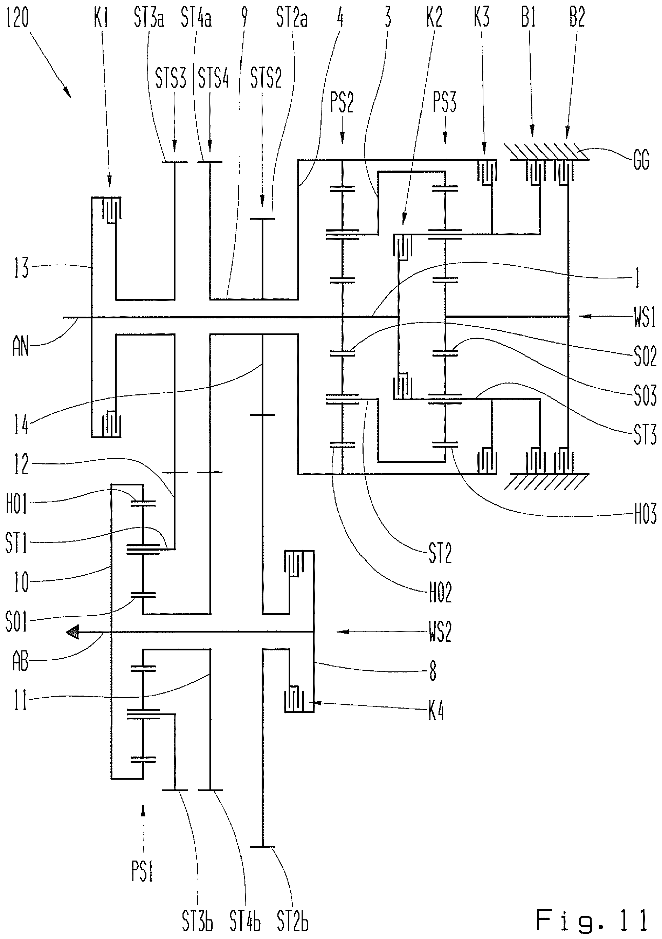

Um axialen Bauraum zu sparen, kann ein Radsatz auf der Abtriebswelle AB positioniert werden. Hierfür bietet sich vor allen Dingen der Radsatz PS1 an. Allerdings wird hierfür eine Stirnradstufe zusätzlich benötigt. In den Figuren 9 bis 11 ist diese Möglichkeit für das zweite Hauptsystem dargestellt. Fig. 9 zeigt ein Getriebeschema vom zweiten Hauptsystem mit dem ersten Planetenradsatz PS1 auf der Abtriebswelle AB. Auch bei diesem System sind wieder mehrere Anordnungsvarianten möglich, wie es in Figur 10 dargestellt ist. Figur 11 zeigt dann eine alternative Positionierung von dem ersten Planetenradsatz PS1 auf der Abtriebswelle AB.

Fig. 10 zeigt eine schematische Darstellung eines weiteren Ausführungsbeispiels des bereits anhand von Fig. 9 beschriebenen nicht erfindungsgemäßen Getriebes zweiten Hauptsystems des Mehrstufengetriebes 120. Dabei handelt es sich um eine zu dem anhand von Fig. 9 beschriebenen zweiten Hauptsystem wirkungsgleiche Verblockungsvarianten des Mehrstufengetriebes 120.

Das in Fig. 10 dargestellte Getriebeschema entspricht dem in Fig. 9 dargestellten Getriebeschema eines Mehrstufengetriebes 120, aus welchem sich mehrere wirkungsgleiche Getriebevarianten ableiten lassen, wobei es für das erste Schaltelement K1, beziehungsweise die Kupplung K1, vier weitere wirkungsgleiche Anordnungsvarianten gibt und für das vierte Schaltelement K4, beziehungsweise die Kupplung K4, eine weitere Anordnungsvariante möglich ist. Die vier Anordnungsvarianten für die Kupplung K1 sind in Fig. 10 mit A5, A6, A7, A8 bezeichnet, die Anordnungsvariante für die Kupplung K4 ist mit A9 bezeichnet.

In einer ersten Anordnungsvariante A5 ist die Kupplung K1 im zwölften Verbindungselement 12 zwischen dem zweiten Stirnrad ST3b des dritten Stirnradsatzes STS3 und dem Sonnenrad SO1 des ersten Planetenradsatzes PS1 angeordnet.

In einer zweiten Anordnungsvariante A6 ist die Kupplung K1 im zehnten Verbindungselement 10 zwischen dem Hohlrad HO1 des ersten Planetenradsatzes PS1 und der Abtriebswelle AB angeordnet.

In einer dritten Anordnungsvariante A7 ist die Kupplung K1 im elften Verbindungselement 11 zwischen dem zweiten Stirnrad ST4b der vierten Stirnradstufe STS4 und dem Steg ST1 des ersten Planetenradsatzes PS1 angeordnet.

In einer vierten Anordnungsvariante A8 ist die Kupplung K1 im neunten Verbindungselement zwischen dem ersten Stirnrad ST4a der vierten Stirnrad stufe STS4 und dem gemeinsamen Verbindungspunkt des vierten, neunten und vierzehnten Verbindungselements angeordnet.

Für die Kupplung K4 ergibt sich neben der Anordnungsvariante im achten Verbindungselement 8 zwischen der Abtriebswelle AB und dem zweiten Stirnrad ST2b der zweiten Stirnradstufe STS2 eine weitere Anordnungsvariante A9. Dabei ist die Kupplung K4 im vierzehnten Verbindungselement 14 zwischen dem ersten Stirnrad ST2a der zweiten Stirnradstufe STS2 und dem gemeinsamen Verbindungspunkt des vierten, neunten und vierzehnten Verbindungselements angeordnet.

Figur 10 zeigt eine der zehn möglichen Anordnungsvarianten für die Kupplungen K1, K4, gemäß denen jede der fünf Anordnungsvarianten für die Kupplung K1 mit den beiden Anordnungsvarianten für die Kupplung K4 kombiniert werden kann.

Somit zeigt Fig. 10 wirkungsgleiche Getriebevarianten beziehungsweise Getriebeschema der Anordnungsvarianten für die Kupplungen K1, K4. Wie bei den ersten Hauptsystemen mit allen Planetensätzen auf der Antriebswelle AN, gezeigt in den Figuren 2 und 3 bis 8, ist auch bei den zweiten Hauptsystemen mit einem Radsatz auf der Abtriebswelle AB eine ganze Reihe an Getriebevarianten möglich. Diese sind größtenteils identisch mit den Getriebevarianten des ersten Hauptsystems. Allerdings kommt aufgrund der Umpositionierung für die Kupplung K1 eine zusätzliche Anordnungsvariante hinzu. Auch hier sind analog zum ersten Hauptsystem für die Kupplungen K1, K4 weitere Anordnungen möglich, ohne dass sich die Funktion des Getriebes 120 verändert. Diese Anordnungsmöglichkeiten sind in Fig. 10 dargestellt. So ergeben sich für die Kupplung K1 vier weitere Anordnungsmöglichkeiten (A5, A6, A7, A8). Für die Kupplung K4 ergibt sich eine weitere Anordnungsmöglichkeit (A9).

Fig. 11 zeigt ein nicht erfindungsgemäßen Getriebeschema des Mehrstufengetriebes 120 als zweites Hauptsystem. Dabei ist die erste Planetenradstufe PS1 auf der Abtriebswelle AB angeordnet.

Im Vergleich zu den in Fig. 9 und 10 gezeigten Ausführungsbeispielen wurde die Position des Planetenradsatzes PS1 und die Anbindung der dritten und vierten Stirnradstufe STS3, STS4 variiert. Alle Getriebeelemente, Verbindungselemente, Wellen, verdrehfeste Verbindungen, Schaltelemente und Anordnungsvarianten im Bereich des ersten Wellenstrangs WS1 sind zu dem in Fig. 10 gezeigten Ausführungsbeispiel identisch. Weiterhin entsprechen das achte und zehnte Verbindungselement 8, 10 auf dem zweiten Wellenstrang WS2 dem in Fig. 10 gezeigten Ausführungsbeispiel. Das elfte und das zwölfte Verbindungselement 11, 12 wurden im Vergleich zu dem in Fig. 10 gezeigten Ausführungsbeispiel verändert.

Das elfte Verbindungselement 11 verbindet das Sonnenrad SO1 des ersten Planetenradsatzes PS1 mit dem zweiten Stirnrad ST4a der vierten Stirnradstufe STS4. In der in Fig. 10 als A7 bezeichneten dritten Anordnungsvariante ist die Kupplung K1 im Bereich des elften Verbindungselementes 11 angeordnet.

Das zwölfte Verbindungselement 12 verbindet das zweite Stirnrad ST3b der dritten Stirnradstufe STS3 mit dem Hohlrad HO1 des ersten Planetenradsatzes PS1. In der in Fig. 10 als A5 bezeichneten ersten Anordnungsvariante ist die Kupplung K1 im Bereich des zwölften Verbindungselementes 12 angeordnet.

Die exakte geometrische Lage der Getriebeelemente (Kupplungen, Radsätze, Stirnräder etc.) ist dabei flexibel, so können einzelne Planetenradsätze, Stirnräder oder Kupplungen auch vertauscht beziehungsweise verschoben werden, solange es die Bindbarkeit zulässt.

In den Figuren 12 und 13 wird eine Hybridisierung eines erfindungsgemäßen Mehrstufengetriebes gezeigt. Auf jeder Welle eines Mehrstufengetriebes gemäß einem der beschriebenen Ausführungsbeispiele kann prinzipiell eine elektrische Maschine oder sonstige Kraft-/Leistungsquelle angeordnet werden.

Fig. 12 zeigt eine schematische Darstellung eines lastschaltbaren Mehrstufengetriebes 120, ausgeführt als erstes Hauptsystem, mit einer Leistungsquelle EM gemäß einem Ausführungsbeispiel der vorliegenden Erfindung. Die Leistungsquelle EM ist gemäß diesem Ausführungsbeispiel als eine elektrische Maschine EM, auch Elektro-Maschine genannt, ausgeführt. Somit handelt es sich um eine Hybridisierung mit einer elektrischen Maschine EM, die direkt auf der Antriebswelle AN des anhand von Fig. 2 beschriebenen und als erstes Hauptsystem ausgeführten Mehrstufengetriebes 120.

Das aus Fig. 2 bekannte Mehrstufengetriebe 120 wird gemäß diesem Ausführungsbeispiel um eine elektrische Maschine EM und eine zusätzliche Kupplung K0 auf der Antriebswelle AN erweitert. Im ersten Wellenstrang WS1 wird zusätzlich die elektrische Maschine EM als Lastquelle und die Kupplung K0 zwischen einem die Antriebswelle AN antreibenden Verbrennungsmotor, wie er beispielsweise in Fig. 1 gezeigt ist, und der elektrischen Maschine EM angeordnet. In axialer Richtung sind auf dem ersten Wellenstrang WS1 die Kupplung K0, die elektrische Maschine EM die zwei Stirnradstufen STS1, STS2 und die drei Planetenradsätze PS1, PS2, PS3 in der Reihenfolge "K0, EM, PS1, STS1, STS2, PS2, PS3" koaxial hintereinander angeordnet. Die elektrische Maschine wirkt direkt auf die Antriebswelle. Die Hybridisierung ist mit allen in den Figuren 1 bis 11 gezeigten und beschriebenen Ausführungsbeispielen möglich. Die Verknüpfung der elektrischen Maschine EM mit der Antriebswelle AN stellt eine beispielhafte Ausführungsvariante dar, prinzipiell kann eine elektrische Maschine oder sonstige Kraftquelle oder Leistungsquelle, auf jeder Welle eines erfindungsgemäßen Planetenlastschaltgetriebes angeordnet werden.

Wird, wie in Fig. 12 gezeigt, zusätzlich zur elektrischen Maschine EM noch die zusätzliche Kupplung K0 zwischen einem Verbrennungsmotor, wie er beispielsweise in Fig. 1 gezeigt ist, und der elektrischen Maschine EM platziert, ist es möglich, alle Gänge, wie sie beispielsweise anhand von Fig. 3 beschrieben sind, sowohl vorwärts als auch rückwärts rein elektrisch zu fahren. Dazu wird der Verbrennungsmotor durch die geöffnete Kupplung K0 abgekoppelt.

Neben der in Fig. 12 gezeigten Hybridisierung mit einer elektrischen Maschine EM direkt auf der Antriebswelle AN ist auch eine Hybridisierung mit einer elektrischen Maschine EM achsparallel zur Antriebswelle AN denkbar, wie es anhand der Fig. 13 beschrieben ist.

Fig. 13 zeigt eine schematische Darstellung eines lastschaltbaren Mehrstufengetriebes 120 mit einer Leistungsquelle EM gemäß einem Ausführungsbeispiel der vorliegenden Erfindung. Die Leistungsquelle EM ist entsprechend zu dem anhand von Fig. 12 beschriebenen Ausführungsbeispiel als eine elektrische Maschine EM ausgeführt. Somit handelt es sich um eine Hybridisierung mit einer elektrischen Maschine EM, die achsparallel zur Antriebswelle AN des anhand von Fig. 6 beschriebenen Ausführungsbeispiels eines Mehrstufengetriebes 120 angeordnet ist.

Die elektrische Maschine EM wird in diesem Ausführungsbeispiel im Vergleich zu dem in Fig. 12 gezeigten Ausführungsbeispiel nicht direkt verdrehfest mit dem ersten Verbindungselement verbunden, sondern über eine fünfte Stirnradstufe STS5 mit dem ersten Verbindungselement gekoppelt. Die elektrische Maschine EM ist achsparallel zu den Wellensträngen auf der dem zweiten Wellenstrang gegenüberliegenden Seite des ersten Wellenstrangs angeordnet. Die Anordnung der Planetenradsätze PS1, PS2, PS3 und der Stirnradstufen STS1, STS2 sowie die Verbindungen beziehungsweise Verblockung untereinander entspricht dem in Figur 6 gezeigten Ausführungsbeispiel der vorliegenden Erfindung.

Die im Vorangegangenen beschriebenen Anordnungen der Radsätze und Kupplungen ermöglicht es, das ein Mehrstufengetriebe gemäß dem beschriebenen Konzept auch als Front- Quer-System genutzt werden kann. Dabei kommt das Mehrstufengetriebe mit einer geringen Anzahl an Planetensätzen aus.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist. Neben den beispielhaft beschriebenen Ausführungsformen und Ausführungsbeispielen gibt es weitere räumliche Anordnung der Planetensätze und der Schaltelemente an sich sowie zueinander, welche die Funktion des beschriebenen Getriebes nicht beeinflusst.

Insbesondere können sich für alle dargestellten beziehungsweise beschriebenen Ausführungsbeispiele der Getriebefamilie bei gleichem Getriebeschema, je nach Standgetriebeübersetzung der einzelnen Planetensätze, unterschiedliche Gangsprünge ergeben, sodass eine anwendungs- beziehungsweise fahrzeugspezifische Variation ermöglicht wird. Weiterhin ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden. Auf der Antriebsseite oder auf der Abtriebsseite kann erfindungsgemäß ein Achsdifferential und/oder ein Verteilerdifferential angeordnet werden. Das erfindungsgemäße Mehrstufengetriebe kann entsprechend vorteilhaft weitergebildet werden, beispielsweise durch Anordnung eines Torsionsschwingungsdämpfers zwischen Antriebsmotor und Getriebe. Weiterhin kann die Antriebswelle AN durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar ist. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist.

Neben der Hybridisierung eines erfindungsgemäßen Mehrstufengetriebes kann in einer weiteren nicht dargestellten Ausführungsform der Erfindung auf jeder Welle, bevorzugt auf der Antriebswelle AN oder der Abtriebswelle AB, eine verschleißfreie Bremse, wie beispielsweise ein hydraulischer oder elektrischer Retarder, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

### Bezugszeichen

- 100: Fahrzeug
- 110: Motor
- 120: Planetenlastschaltgetriebe
- AN: Antriebswelle
- AB: Abtriebswelle
- WS1: erster Wellenstrang
- WS2: zweiter Wellenstrang
- K1: Schaltelement, Kupplung
- K2: Schaltelement, Kupplung
- K3: Schaltelement, Kupplung
- K4: Schaltelement, Kupplung
- B1: Schaltelement, Bremse
- B2: Schaltelement, Bremse
- PS1: erster Planetenradsatz
- PS2: zweiter Planetenradsatz
- PS3: dritter Planetenradsatz
- SO1: Sonnenrad
- SO2: Sonnenrad
- SO3: Sonnenrad
- HO1: Hohlrad
- HO2: Hohlrad
- HO3: Hohlrad
- ST1: Steg
- ST2: Steg
- ST3: Steg
- STS1: erste Stirnradstufe
- STS2: zweite Stirnradstufe
- STS3: dritte Stirnradstufe
- ST1a: erstes Stirnrad
- ST1b: zweites Stirnrad
- ST2a: erstes Stirnrad
- ST2b: zweites Stirnrad
- ST3a: erstes Stirnrad
- ST3b: zweites Stirnrad
- ST4a: erstes Stirnrad
- ST4b: zweites Stirnrad
- 1: erstes Verbindungselement
- 2: zweites Verbindungselement
- 3: drittes Verbindungselement
- 4: viertes Verbindungselement
- 5: fünftes Verbindungselement
- 6: sechstes Verbindungselement
- 7: siebtes Verbindungselement
- 8: achtes Verbindungselement
- 9: neuntes Verbindungselement
- 10: zehntes Verbindungselement
- 11: elftes Verbindungselement
- 12: zwölftes Verbindungselement
- 13: dreizehntes Verbindungselement
- GG: Getriebegehäuse
- EM: Leistungsquelle / elektrische Maschine

## Patentansprüche

1. Lastschaltbares Mehrstufengetriebe (120) in Planetenbauweise für ein Fahrzeug (100)zur Anordnung zwischen einer Antriebswelle (AN) und einer Abtriebswelle (AB), wobei das Mehrstufengetriebe zwei parallele Wellenstränge (WS1, WS2), sechs Schaltelemente (K1, K2, K3, K4, B1, B2), zwei Stirnradstufen (STS1, STS2) und drei Planetenradsätze (PS1, PS2, PS3) aufweist, wobei die Planetenradsätze (PS1, PS2, PS3) jeweils ein Sonnenrad (SO1, SO2, SO3), ein Hohlrad (HO1, HO2, HO3) und einen in einem Steg (ST1, ST2, ST3) zusammengeführten Planetenträger mit mehreren Planetenrädern aufweisen, wobei die beiden Wellenstränge (WS1, WS2) über die zwei Stirnradstufen (STS1, STS2) miteinander verbindbar sind, wobei durch ein selektives Eingreifen der sechs Schaltelemente (K1, K2, K3, K4, B1, B2) verschiedene Übersetzungsverhältnisse zwischen der Antriebswelle (AN) und der Abtriebswelle (AB) bewirkbar sind, sodass eine Mehrzahl an Vorwärtsgängen, insbesondere neun Vorwärtsgänge, und zumindest ein Rückwärtsgang realisierbar sind, wobei
die drei Planetenradsätze (PS1, PS2, PS3) und die Antriebswelle (AN) auf einem ersten Wellenstrang (WS1) der zwei parallelen Wellenstränge (WS1, WS2) angeordnet sind,
und wobei die Abtriebswelle (AB) auf einem zweiten Wellenstrang (WS2) der zwei parallelen Wellenstränge (WS1, WS2) angeordnet ist,
**dadurch gekennzeichnet, dass**
ein Sonnenrad (SO2) eines zweiten Planetenradsatzes (PS2) der drei Planetenradsätze (PS1, PS2, PS3) und die Antriebswelle (AN) verdrehfest miteinander verbunden sind und ein erstes Verbindungselement (1) bilden,
ein Sonnenrad (SO1) eines ersten Planetenradsatzes (PS1) der drei Planetenradsätze (PS1, PS2, PS3), ein erstes Stirnrad (ST2a) einer zweiten Stirnradstufe (STS2) der zumindest zwei Stirnradstufen (STS1, STS2) und ein Hohlrad (HO2) des zweiten Planetenradsatzes (PS2) über ein zweites, viertes und vierzehntes Verbindungselement miteinander verbindbar oder verbunden sind, wobei das zweite, vierte und vierzehnte Verbindungselement (2, 4, 14) einen gemeinsamen Verbindungspunkt aufweisen und das zweite Verbindungselement (2) ferner mit dem Sonnenrad (SO1) des ersten Planetenradsatzes (PS1) verbunden ist, das vierte Verbindungselement (4) ferner mit dem Hohlrad (HO2) des zweiten Planetenradsatzes (PS2) verbunden ist und das vierzehnte Verbindungselement (14) ferner mit dem ersten Stirnrad (ST2a) der zweiten Stirnradstufe (STS2) verbunden ist,
ein Hohlrad (HO3) eines dritten Planetenradsatzes (PS3) der drei Planetenradsätze (PS1, PS2, PS3) und der Steg (ST2) des zweiten Planetenradsatzes (PS2) verdrehfest miteinander verbunden sind und ein drittes Verbindungselement (3) bilden,
ein erstes Stirnrad (ST1a) einer ersten Stirnradstufe (STS1) der zumindest zwei Stirnradstufen (STS1, STS2) und ein Hohlrad (HO1) des ersten Planetenradsatzes (PS1) miteinander verbunden sind und ein fünftes Verbindungselement (5) bilden,
ein zweites Stirnrad (ST1b) der ersten Stirnradstufe (STS1) und die Abtriebswelle (AB) verbunden sind und ein sechstes Verbindungselement (6) bilden,
ein Steg (ST1) des ersten Planetenradsatzes (PS1) und die Antriebswelle (AN) miteinander verbunden sind und ein siebtes Verbindungselement (7) bilden,
ein zweites Stirnrad (ST2b) der zweiten Stirnradstufe (STS2) und die Abtriebswelle (AB) miteinander verbunden sind und ein achtes Verbindungselement (8) bilden,
wobei
ein zweites Schaltelement (K2) der sechs Schaltelemente (K1, K2, K3, K4, B1, B2) im Kraftfluss zwischen der Antriebswelle (AN) und einem Steg (ST3) des dritten Planetenradsatzes (PS3) angeordnet ist,
ein drittes Schaltelement (K3) der sechs Schaltelemente (K1, K2, K3, K4, B1, B2) im Kraftfluss zwischen der dem vierten Verbindungselement (4) und dem Steg (ST3) des dritten Planetenradsatzes (PS3) angeordnet ist,
ein fünftes Schaltelement (B1) der sechs Schaltelemente (K1, K2, K3, K4, B1, B2) im Kraftfluss zwischen dem Steg (ST3) des dritten Planetenradsatzes (PS3) und einem Getriebegehäuse (GG) angeordnet ist, und
ein sechstes Schaltelement (B2) der sechs Schaltelemente (K1, K2, K3, K4, B1, B2) im Kraftfluss zwischen dem Sonnenrad (SO3) des dritten Planetenradsatzes (PS3) und dem Getriebegehäuse (GG) angeordnet ist.

2. Lastschaltbares Mehrstufengetriebe (120) gemäß Anspruch 1, **dadurch gekennzeichnet, dass** das siebte Verbindungselement (7) ein erstes Schaltelement (K1) der sechs Schaltelemente (K1, K2, K3, K4, B1, B2) aufweist, wobei das erste Schaltelement (K1) im Kraftfluss zwischen der Antriebswelle (AN) und dem Steg (ST1) des ersten Planetenradsatzes (PS1) angeordnet ist.

3. Lastschaltbares Mehrstufengetriebe (120) gemäß Anspruch 1, **dadurch gekennzeichnet, dass** das zweite Verbindungselement (2) das erste Schaltelement (K1) aufweist, wobei das erste Schaltelement (K1) im Kraftfluss zwischen dem ersten Stirnrad (ST2a) der zweiten Stirnradstufe (STS2) und dem Sonnenrad (SO1) des ersten Planetenradsatzes angeordnet ist.

4. Lastschaltbares Mehrstufengetriebe (120) gemäß Anspruch 1, **dadurch gekennzeichnet, dass** das fünfte Verbindungselement (5) das erste Schaltelement (K1) aufweist, wobei das erste Schaltelement (K1) im Kraftfluss zwischen einem Hohlrad (HO1) des ersten Planetenradsatzes (PS1) und einem ersten Stirnrad (ST1a) der ersten Stirnradstufe (STS1) angeordnet ist.

5. Lastschaltbares Mehrstufengetriebe (120) gemäß Anspruch 1, **dadurch gekennzeichnet, dass** das sechste Verbindungselement (6) das erste Schaltelement (K1) aufweist, wobei das erste Schaltelement (K1) im Kraftfluss zwischen einem zweiten Stirnrad (ST1b) der ersten Stirnradstufe (STS1) und der Abtriebswelle (AB) angeordnet ist.

6. Lastschaltbares Mehrstufengetriebe (120) gemäß einem der Ansprüche 1 bis 5, **dadurch gekennzeichnet, dass** das achte Verbindungselement (8) ein viertes Schaltelement (K4) der sechs Schalt-elemente (K1, K2, K3, K4, B1, B2) aufweist, wobei das vierte Schaltelement (K4) im Kraftfluss zwischen dem zweiten Stirnrad (ST2b) der zweiten Stirnradstufe (STS2) und der Abtriebswelle (AB) angeordnet ist.

7. Lastschaltbares Mehrstufengetriebe (120) gemäß einem der Ansprüche 1 bis 5, **dadurch gekennzeichnet, dass** das vierzehnte Verbindungselement (14) ein viertes Schaltelement (K4) der sechs Schaltelemente (K1, K2, K3, K4, B1, B2) aufweist, wobei das vierte Schaltelement (K4) im Kraftfluss zwischen dem vierten Verbindungselement (4) und dem ersten Stirnrad (ST2a) der zweiten Stirnradstufe (STS2) angeordnet ist.

8. Lastschaltbares Mehrstufengetriebe (120) gemäß einem der vorangegangenen Ansprüche, **dadurch gekennzeichnet, dass** auf der Antriebswelle (AN) eine Leistungsquelle (EM), insbesondere ein Elektromotor (EM), angeordnet ist.

9. Lastschaltbares Mehrstufengetriebe (120) gemäß einem der vorangegangenen Ansprüche, **dadurch gekennzeichnet, dass** zumindest ein Planetenradsatz (PS1, PS2, PS3) als Minus-Planetenradsatz ausgebildet ist.

10. Lastschaltbares Mehrstufengetriebe (120) gemäß einem der vorangegangenen Ansprüche, **dadurch gekennzeichnet, dass** sich
der erste Vorwärtsgang durch Schließen des dritten, vierten und sechsten Schaltelements (K3, K4, B2),
der zweite Vorwärtsgang durch Schließen des zweiten, dritten und vierten Schaltelements (K2, K3, K4),
der dritte Vorwärtsgang durch Schließen des zweiten, vierten und sechsten Schaltelements (K2, K4, B2),
der vierte Vorwärtsgang durch Schließen des ersten, zweiten und vierten Schaltelements (K1, K2, K4),
der fünfte Vorwärtsgang durch Schließen des ersten, zweiten und sechsten Schaltelements (K1, K2, B2),
der sechste Vorwärtsgang durch Schließen des ersten, zweiten und dritten Schaltelements (K1, K2, K3),
der siebte Vorwärtsgang durch Schließen des ersten, dritten und sechsten Schaltelements (K1, K3, B2),
der achte Vorwärtsgang durch Schließen des ersten, dritten und fünften Schaltelements (K1, K3, B1),
der neunte Vorwärtsgang durch Schließen des ersten, fünften und sechsten Schaltelements (K1, B1, B2), und
ein Rückwärtsgang durch schließen des vierten, fünften und sechsten Schaltelements (K4, B1, B2)
ergibt.

## Claims

1. Power-shift multiple-stage transmission (120) of planetary design for a vehicle (100) for arranging between a drive shaft (AN) and an output shaft (AB), the multiple-stage transmission having two parallel shaft trains (WS1, WS2), six shifting elements (K1, K2, K3, K4, B1, B2), two spur gear stages (STS1, STS2) and three planetary gear sets (PS1, PS2, PS3), the planetary gear sets (PS1, PS2, PS3) in each case having a sun gear (SO1, SO2, SO3), an internal gear (HO1, HO2, HO3) and a planetary carrier which is combined in a spider (ST1, ST2, ST3) with a plurality of planetary gears, it being possible for the two shaft trains (WS1, WS2) to be connected to one another via the two spur gear stages (STS1, STS2), it being possible for different transmission ratios to be brought about between the drive shaft (AN) and the output shaft (AB) by way of selective engagement of the six shifting elements (K1, K2, K3, K4, B1, B2), with the result that a plurality of forward gears, in particular nine forward gears, and at least one reverse gear can be realised,
the three planetary gear sets (PS1, PS2, PS3) and the drive shaft (AN) being arranged on a first shaft train (WS1) of the two parallel shaft trains (WS1, WS2),
and the output shaft (AB) being arranged on a second shaft train (WS2) of the two parallel shaft trains (WS1, WS2),
**characterized in that**
a sun gear (SO2) of a second planetary gear set (PS2) of the three planetary gear sets (PS1, PS2, PS3) and the drive shaft (AN) are connected to one another fixedly so as to rotate together and form a first connecting element (1),
a sun gear (SO1) of a first planetary gear set (PS1) of the three planetary gear sets (PS1, PS2, PS3), a first spur gear (ST2a) of a second spur gear stage (STS2) of the at least two spur gear stages (STS1, STS2) and an internal gear (HO2) of the second planetary gear set (PS2) being connected or being capable of being connected to one another via a second, fourth and fourteenth connecting element, the second, fourth and fourteenth connecting element (2, 4, 14) having a common connecting point and, furthermore, the second connecting element (2) being connected to the sun gear (SO1) of the first planetary gear set (PS1), the fourth connecting element (4) being connected, furthermore, to the internal gear (HO2) of the second planetary gear set (PS2), and the fourteenth connecting element (14) being connected, furthermore, to the first spur gear (ST2a) of the second spur gear stage (STS2),
an internal gear (HO3) of the third planetary gear set (PS3) of the three planetary gear sets (PS1, PS2, PS3) and the spider (ST2) of the second planetary gear set (PS2) being connected to one another fixedly so as to rotate together and forming a third connecting element (3),
a first spur gear (ST1a) of a first spur gear stage (STS1) of the at least two spur gear stages (STS1, STS2) and an internal gear (HO1) of the first planetary gear set (PS1) being connected to one another and forming a fifth connecting element (5),
a second spur gear (ST1b) of the first spur gear stage (STS1) and the output shaft (AB) being connected and forming a sixth connecting element (6),
a spider (ST1) of the first planetary gear set (PS1) and the drive shaft (AN) being connected to one another and forming a seventh connecting element (7),
a second spur gear (ST2b) of the second spur gear stage (STS2) and the output shaft (AB) being connected to one another and forming an eighth connecting element (8),
a second shifting element (K2) of the six shifting elements (K1, K2, K3, K4, B1, B2) being arranged in the power flow between the drive shaft (AN) and a spider (ST3) of the third planetary gear set (PS3),
a third shifting element (K3) of the six shifting elements (K1, K2, K3, K4, B1, B2) being arranged in the power flow between the the fourth connecting element (4) and the spider (ST3) of the third planetary gear set (PS3),
a fifth shifting element (B1) of the six shifting elements (K1, K2, K3, K4, B1, B2) being arranged in the power flow between the spider (ST3) of the third planetary gear set (PS3) and a transmission housing (GG), and
a sixth shifting element (B2) of the six shifting elements (K1, K2, K3, K4, B1, B2) being arranged in the power flow between the sun gear (SO3) of the third planetary gear set (PS3) and the transmission housing (GG) .

2. Power-shift multiple-stage transmission (120) according to Claim 1, **characterized in that** the seventh connecting element (7) has a first shifting element (K1) of the six shifting elements (K1, K2, K3, K4, B1, B2), the first shifting element (K1) being arranged in the power flow between the drive shaft (AN) and the spider (ST1) of the first planetary gear set (PS1).

3. Power-shift multiple-stage transmission (120) according to Claim 1, **characterized in that** the second connecting element (2) has the first shifting element (K1), the first shifting element (K1) being arranged in the power flow between the first spur gear (ST2a) of the second spur gear stage (STS2) and the sun gear (SO1) of the first planetary gear set.

4. Power-shift multiple-stage transmission (120) according to Claim 1, **characterized in that** the fifth connecting element (5) has the first shifting element (K1), the first shifting element (K1) being arranged in the power flow between an internal gear (HO1) of the first planetary gear set (PS1) and a first spur gear (ST1a) of the first spur gear stage (STS1).

5. Power-shift multiple-stage transmission (120) according to Claim 1, **characterized in that** the sixth connecting element (6) has the first shifting element (K1), the first shifting element (K1) being arranged in the power flow between a second spur gear (ST1b) of the first spur gear stage (STS1) and the output shaft (AB).

6. Power-shift multiple-stage transmission (120) according to one of Claims 1 to 5, **characterized in that** the eighth connecting element (8) has a fourth shifting element (K4) of the six shifting elements (K1, K2, K3, K4, B1, B2), the fourth shifting element (K4) being arranged in the power flow between the second spur gear (ST2b) of the second spur gear stage (STS2) and the output shaft (AB).

7. Power-shift multiple-stage transmission (120) according to one of Claims 1 to 5, **characterized in that** the fourteenth connecting element (14) has a fourth shifting element (K4) of the six shifting elements (K1, K2, K3, K4, B1, B2), the fourth shifting element (K4) being arranged in the power flow between the fourth connecting element (4) and the first spur gear (ST2a) of the second spur gear stage (STS2).

8. Power-shift multiple-stage transmission (120) according to one of the preceding claims, **characterized in that** a power source (EM), in particular an electric motor (EM), is arranged on the drive shaft (AN).

9. Power-shift multiple-stage transmission (120) according to one of the preceding claims, **characterized in that** at least one planetary gear set (PS1, PS2, PS3) is configured as a negative planetary gear set.

10. Power-shift multiple-stage transmission (120) according to one of the preceding claims, **characterized in that**
the first forward gear results from closure of the third, fourth and sixth shifting element (K3, K4, B2),
the second forward gear results from closure of the second, third and fourth shifting element (K2, K3, K4), the third forward gear results from closure of the second, fourth and sixth shifting element (K2, K4, B2), the fourth forward gear results from closure of the first, second and fourth shifting element (K1, K2, K4), the fifth forward gear results from closure of the first, second and sixth shifting element (K1, K2, B2),
the sixth forward gear results from closure of the first, second and third shifting element (K1, K2, K3),
the seventh forward gear results from closure of the first, third and sixth shifting element (K1, K3, B2), the eighth forward gear results from closure of the first, third and fifth shifting element (K1, K3, B1), the ninth forward gear results from closure of the first, fifth and sixth shifting element (K1, B1, B2), and
a reverse gear results from closure of the fourth, fifth and sixth shifting element (K4, B1, B2).

## Revendications

1. Boîte de vitesses (120) à plusieurs étages et à charge commutable, dans un mode de construction planétaire, destinée à un véhicule (100), la boîte de vitesses étant prévue pour être disposée entre un arbre d'entraînement (AN) et un arbre de sortie (AB), la boîte de vitesses à plusieurs étages comportant deux lignes d'arbre parallèles (WS1, WS2), six éléments de commutation (K1, K2, K3, K4, B1, B2), deux étages de roues droites (STS1, STS2), et trois ensembles de satellites (PS1, PS2, PS3), les ensembles de satellites (PS1, PS2, PS3) comportant chacun une roue solaire (SO1, SO2, S03), une couronne (HO1, HO2, HO3) et un porte-satellites réuni dans une traverse (ST1, ST2, ST3) et comportant une pluralité de satellites, les deux lignes d'arbre (WS1, WS2) pouvant être reliées entre elles par le biais des deux étages de roues droites (STS1, STS2), différents rapports de transmission entre l'arbre d'entraînement (AN) et l'arbre de sortie (AB) pouvant être obtenus par un engagement sélectif des six éléments de commutation (K1, K2, K3, K4, B1, B2) de telle sorte qu'une pluralité de rapports de marche avant, en particulier neuf rapports de marche avant, et au moins un rapport de marche arrière peuvent être réalisés, les trois ensembles de satellites (PS1, PS2, PS3) et l'arbre d'entraînement (AN) étant disposés sur une première ligne d'arbre (WS1) des deux lignes d'arbre parallèles (WS1, WS2), et l'arbre de sortie (AB) étant disposé sur une deuxième ligne d'arbre (WS2) des deux lignes d'arbre parallèles (WS1, WS2),
**caractérisée en ce que**
une roue solaire (S02) d'un deuxième ensemble de satellites (PS2) des trois ensembles de satellites (PS1, PS2, PS3) et l'arbre d'entraînement (AN) sont reliés solidairement en rotation entre eux et forment un premier élément de liaison (1),
une roue solaire (SO1) d'un premier ensemble de satellites (PS1) des trois ensembles de satellites (PS1, PS2, PS3), une première roue droite (ST2a) d'un deuxième étage de roues droites (STS2) des au moins deux étages de roues droites (STS1, STS2), et une couronne (HO2) du deuxième ensemble de satellites (PS2) sont reliés ou peuvent être reliés entre eux par le biais de deuxième, quatrième et quatorzième éléments de liaison, les deuxième, quatrième et quatorzième éléments de liaison (2, 4, 14) comportant un point de liaison commun et le deuxième élément de liaison (2) étant en outre relié à la roue solaire (SO1) du premier ensemble de satellites (PS1), le quatrième élément de liaison (4) étant en outre relié à la couronne (HO2) du deuxième ensemble de satellites (PS2) et le quatorzième élément de liaison (14) étant en outre relié à la première roue droite (ST2a) du deuxième étage de roues droites (STS2),
une couronne (HO3) d'un troisième ensemble de satellites (PS3) des trois ensembles de satellites (PS1, PS2, PS3) et la traverse (ST2) du deuxième ensemble de satellites (PS2) sont reliés solidairement en rotation ente eux et forment un troisième élément de liaison (3),
une première roue droite (ST1a) d'un premier étage de roues droites (STS1) des au moins deux étages de roues droites (STS1, STS2) et une couronne (HO1) du premier ensemble de satellites (PS1) sont reliés entre eux et forment un cinquième élément de liaison (5),
une deuxième roue droite (ST1b) du premier étage de roues droites (STS1) et l'arbre de sortie (AB) sont reliés et forment un sixième élément de liaison (6),
une traverse (ST1) du premier ensemble de satellites (PS1) et l'arbre d'entraînement (AN) sont reliés entre eux et forment un septième élément de liaison (7),
une deuxième roue droite (ST2b) du deuxième étage de roues droites (STS2) et l'arbre de sortie (AB) sont reliés entre eux et forment un huitième élément de liaison (8),
un deuxième élément de commutation (K2) des six éléments de commutation (K1, K2, K3, K4, B1, B2) étant disposé dans le flux de force entre l'arbre d'entraînement (AN) et une traverse (ST3) du troisième ensemble de satellites (PS3),
un troisième élément de commutation (K3) des six éléments de commutation (K1, K2, K3, K4, B1, B2) étant disposé dans le flux de force entre le le quatrième élément de liaison (4) et la traverse (ST3) du troisième ensemble de satellites (PS3),
un cinquième élément de commutation (B1) des six éléments de commutation (K1, K2, K3, K4, B1, B2) étant disposé dans le flux de force entre la traverse (ST3) du troisième ensemble de satellites (PS3) et un boîtier de boîte de vitesses (GG), et
un sixième élément de commutation (B2) des six éléments de commutation (K1, K2, K3, K4, B1, B2) étant disposé dans le flux de force entre la roue solaire (SO3) du troisième ensemble de satellites (PS3) et le boîtier de boîte de vitesses (GG).

2. Boîte de vitesses (120) à plusieurs étages et à charge commutable selon la revendication 1, **caractérisée en ce que** le septième élément de liaison (7) comprend un premier élément de commutation (K1) des six éléments de commutation (K1, K2, K3, K4, B1, B2), le premier élément de commutation (K1) étant disposé dans le flux de force entre l'arbre d'entraînement (AN) et la traverse (ST1) du premier ensemble de satellites (PS1).

3. Boîte de vitesses (120) à plusieurs étages et à charge commutable selon la revendication 1, **caractérisée en ce que** le deuxième élément de liaison (2) comporte le premier élément de commutation (K1), le premier élément de commutation (K1) étant disposé dans le flux de force entre la première roue droite (ST2a) du deuxième étage de roues droites (STS2) et la roue solaire (SO1) du premier ensemble de satellites.

4. Boîte de vitesses (120) à plusieurs étages et à charge commutable selon la revendication 1, **caractérisée en ce que** le cinquième élément de liaison (5) comprend le premier élément de commutation (K1), le premier élément de commutation (K1) étant disposé dans le flux de force entre une couronne (HO1) du premier ensemble de satellites (PS1) et une première roue droite (ST1a) du premier étage de roues droites (STS1).

5. Boîte de vitesses (120) à plusieurs étages et à charge commutable selon la revendication 1, **caractérisée en ce que** le sixième élément de liaison (6) comprend le premier élément de commutation (K1), le premier élément de commutation (K1) étant disposé dans le flux de force entre une deuxième roue droite (ST1b) du premier étage de roues droites (STS1) et l'arbre de sortie (AB).

6. Boîte de vitesses (120) à plusieurs étages et à charge commutable selon l'une quelconque des revendications 1 à 5, **caractérisée en ce que** le huitième élément de connexion (8) comporte un quatrième élément de commutation (K4) des six éléments de commutation (K1, K2, K3, K4, B1, B2), le quatrième élément de commutation (K4) étant disposé dans le flux de force entre la deuxième roue droite (ST2b) du deuxième étage de roues droites (STS2) et l'arbre de sortie (AB).

7. Boîte de vitesses (120) à plusieurs étages et à charge commutable selon l'une des revendications 1 à 5, **caractérisée en ce que** le quatorzième élément de liaison (14) comporte un quatrième élément de commutation (K4) des six éléments de commutation (K1, K2, K3, K4, B1, B2), le quatrième élément de commutation (K4) étant disposé dans le flux de force entre le quatrième élément de liaison (4) et la première roue droite (ST2a) du deuxième étage de roues droites (STS2).

8. Boîte de vitesses (120) à plusieurs étages et à charge commutable selon l'une des revendications précédentes, **caractérisée en ce qu'**une source de puissance (EM), en particulier un moteur électrique (EM), est disposé sur l'arbre d'entraînement (AN).

9. Boîte de vitesses (120) à plusieurs étages et à charge commutable selon l'une des revendications précédentes, **caractérisée en ce qu'**au moins un ensemble de satellites (PS1, PS2, PS3) est conçu comme ensemble de satellites négatif.

10. Boîte de vitesses (120) à plusieurs étages et à charge commutable selon l'une des revendications précédentes, **caractérisée en ce que**
le premier rapport de marche avant est obtenu par fermeture des troisième, quatrième et sixième éléments de commutation (K3, K4, B2),
le deuxième rapport de marche avant est obtenu par fermeture des deuxième, troisième et quatrième éléments de commutation (K2, K3, K4),
le troisième rapport de marche avant est obtenu par fermeture des deuxième, quatrième et sixième éléments de commutation (K2, K4, B2),
le quatrième rapport de marche avant est obtenu par fermeture des premier, deuxième et quatrième éléments de commutation (K1, K2, K4),
le cinquième rapport de marche avant est obtenu par fermeture des premier, deuxième et sixième éléments de commutation (K1, K2, B2),
le sixième rapport de marche avant est obtenu par fermeture des premier, deuxième et troisième éléments de commutation (K1, K2, K3),
le septième rapport de marche avant est obtenu par fermeture des premier, troisième et sixième éléments de commutation (K1, K3, B2),
le huitième rapport de marche avant est obtenu par fermeture des premier, troisième et cinquième éléments de commutation (K1, K3, B1),
le neuvième rapport de marche avant est obtenu par fermeture des premier, cinquième et sixième éléments de commutation (K1, B1, B2), et
un rapport de marche arrière est obtenu par fermeture des quatrième, cinquième et sixième éléments de commutation (K4, B1, B2).
